(19) Europäisches Patentamt
European Patent Office
Office européen des brevets

(11) **EP 3 905 592 A1**

(12) **EUROPEAN PATENT APPLICATION**
published in accordance with Art. 153(4) EPC

(43) Date of publication:
**03.11.2021 Bulletin 2021/44**

(21) Application number: **19910882.0**

(22) Date of filing: **17.01.2019**

(51) Int Cl.:
***H04L 12/24*** *(2006.01)*

(86) International application number:
**PCT/CN2019/072241**

(87) International publication number:
**WO 2020/147087 (23.07.2020 Gazette 2020/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang District**
**Shenzhen, Guangdong 518129 (CN)**

(72) Inventors:
• **LI, Chenwan**
**Shenzhen, Guangdong 518129 (CN)**

• **LI, Zhenyu**
**Shenzhen, Guangdong 518129 (CN)**
• **YU, Haifeng**
**Shenzhen, Guangdong 518129 (CN)**
• **WANG, Yuchen**
**Shenzhen, Guangdong 518129 (CN)**
• **WU, Yiling**
**Shenzhen, Guangdong 518129 (CN)**

(74) Representative: **Maiwald Patent- und Rechtsanwaltsgesellschaft mbH**
**Elisenhof**
**Elisenstraße 3**
**80335 München (DE)**

(54) **SYSTEM MESSAGE PROCESSING METHOD AND DEVICE**

(57) This application provides a system message processing method and apparatus. A terminal receives a MIB, and obtains indication information. The indication information is used to indicate a type of the MIB. In this way, the terminal can process the MIB based on the type of the MIB. In other words, in embodiments of this application, the terminal may decode the MIB based on the type of the MIB. Therefore, the following case is avoided: The MIB is decoded in a fixed manner, and consequently, the MIB cannot be accurately parsed. In this way, communication efficiency is improved.

FIG. 3

**Description**

**TECHNICAL FIELD**

This application relates to the communications field, and more specifically, to a system message processing method and apparatus.

**BACKGROUND**

Currently, there are abundant frequency domain resources in China. There are approximately 278 available 25 kHz carriers in a 230-megabyte spectrum. In other words, current spectrum resources can support a relatively large quantity of configured system messages and relatively large configured content in China. For example, a master information block (master information block, MIB) may occupy one to four carriers, and each of a system information block (system information block, SIB) 1 to a SIB4 may occupy one to two carriers.

However, there are limited available spectrum resources in other countries. For example, 24 pairs of frequencies are allocated in total in Thailand, that is, 48 12.5 kHz carriers; and 15 pairs of frequencies are allocated in total in Kazakhstan, that is, 30 12.5 kHz carriers. In this case, when spectrums in the other countries are used for communication, fewer services can be provided for a terminal if a normal system message is still configured based on the spectrum resources in China. Therefore, when the spectrums in the other countries are used for communication, a reduced system message may be used to reduce overheads of common channels.

In other words, because system messages in different modes are used in different countries, the terminal may fail in decoding the system messages, causing relatively low communication efficiency.

**SUMMARY**

This application provides a system message processing method and apparatus, to improve communication efficiency.

According to a first aspect, a system message processing method is provided. The method includes: A terminal receives a master information block MIB. The terminal obtains indication information. The indication information is used to indicate a type of the MIB. The terminal processes the MIB based on the type of the MIB.

The terminal receives the MIB, and obtains the indication information. The indication information is used to indicate the type of the MIB. In this way, the terminal can process the MIB based on the type of the MIB. In other words, in this embodiment of this application, the terminal may decode the MIB based on the type of the MIB. Therefore, the following case is avoided: The MIB is decoded in a fixed manner, and consequently, the MIB cannot be accurately parsed. In this way, communication efficiency is improved.

In some possible implementations, that the terminal obtains the indication information includes: The terminal obtains the indication information from a logical channel message; the terminal obtains the indication information from the MIB; or the terminal obtains the indication information from content carried in a broadcast channel.

The indication information is carried in the logical channel message, the MIB, or the content carried in the broadcast channel. In this way, the terminal may obtain the indication information. In this case, the indication information does not need to be dedicatedly sent, thereby reducing signaling overheads.

In some possible implementations, that the terminal obtains the indication information includes: The terminal determines the indication information based on a resource location for receiving the MIB.

The terminal may learn of the type of the MIB in an implicit manner. In other words, no dedicated indication information is needed, thereby reducing signaling overheads.

In some possible implementations, the indication information includes at least one field. A value of the at least one field is used to indicate the type of the MIB.

There may be a plurality of types of MIBs. The value of the at least one field may be determined based on a quantity of the types of MIBs. For example, when there are two types of MIBs (for example, a first-type MIB and a second-type MIB), the indication information may include one bit. The type of the MIB is indicated by using a value of the bit, thereby reducing resource occupation for indicating the type of the MIB.

In some possible implementations, the terminal determines the indication information based on a sequence of a received synchronization signal. The synchronization signal includes a first synchronization signal and a second synchronization signal.

The terminal may further determine the type of the MIB based on the sequence of the synchronization signal. Specifically, the terminal may directly determine the type of the MIB based on the sequence of the synchronization signal; or may first determine the resource location of the MIB based on the sequence of the synchronization signal, and then determine the type of the MIB based on the resource location of the MIB, to determine the type of the MIB in an implicit manner, thereby reducing signaling overheads.

In some possible implementations, that the terminal determines the indication information based on the sequence of the received synchronization signal includes: When the sequence of the synchronization signal belongs to a first sequence set, the terminal determines that the indication information is used to indicate a type of a first MIB. When the sequence of the synchronization signal belongs to a second sequence set, the terminal determines that the indication information is used to indicate a type of a third MIB.

The first sequence set may be a secondary synchronization signal or a primary synchronization signal that includes 32 base sequences, and the second sequence set may be a secondary synchronization signal or a primary synchronization signal that includes four base sequences. The terminal determines, based on a sequence set to which the received synchronization signal belongs, the type that is of the MIB and that is indicated by the indication information. In other words, no dedicated signaling is needed to indicate the type of the MIB, thereby reducing signaling overheads.

In some possible implementations, the type of the MIB includes a first type and a second type. A system message to which a first-type MIB belongs further includes a first SIB 1, a first SIB2, a first SIB3, and a first SIB4. A system message to which a second-type MIB belongs further includes a second system information block SIB1.

There may be two types of MIBs: The system message to which the first-type MIB belongs and the system message to which the second-type MIB belongs include different content. The system message to which the first-type MIB belongs may be a system message in a conventional solution.

In some possible implementations, the second MIB includes some fields of the first MIB and the first SIB4. The second SIB 1 includes some fields of the first SIB 1, the first SIB2, and the first SIB4. The first SIB3 includes a field used to indicate configuration information of group hopping.

The first MIB may include fields respectively used to indicate a hyper frame number, a system frame number, an antenna port, a system message value tag, an access enabling indication, a scheduling indication of a SIB 1, a cell identity (identity, ID), and a carrier indication. The first SIB 1 includes a field used to indicate an access control parameter and a field used to indicate enabling of frequency hopping. The first SIB2 includes a field used to indicate a valid carrier list. The first SIB3 includes the field used to indicate the configuration information of group hopping. The first SIB4 includes a field used to indicate a common resource, a field used to indicate configuration information of a paging channel, and a field used to indicate configuration information of a broadcast channel. A second-type system message may include some fields of a first-type system message. For example, the second MIB may include fields used to indicate a hyper frame number, a system frame number, a system message value tag, an access enabling indication, a scheduling indication of a SIB1, and a cell ID; a field used to indicate configuration of a broadcast channel; and a field used to indicate configuration of a paging channel. The second SIB 1 may include a field used to indicate an access control parameter, a field used to indicate enabling of frequency hopping, a field used to indicate a valid carrier list, and a field used to indicate a common resource. In other words, some unnecessary fields are omitted in the second-type system message, thereby reducing resource occupation of the second-type system message.

In some possible implementations, the first SIB4 includes a configuration field of a plurality of sets of common resources, and the second SIB 1 further includes a configuration field of one set of common resources.

The first SIB4 in the first-type system message may include the configuration field of the plurality of sets of common resources, and the second SIB1 in the second-type system message may include the configuration field of the one set of common resources. In other words, both the first-type system message and the second-type system message can be used to implement configuration of common resources. The terminal may accurately parse the MIB based on the type of the MIB, thereby improving communication efficiency.

In some possible implementations, the first SIB1 includes a field used to indicate enabling of uplink single hopping, downlink single hopping, uplink group hopping, or downlink group hopping; and the second SIB 1 further includes a field used to indicate whether to enable frequency hopping.

The first SIB1 may be used to indicate the enabling of uplink single hopping, downlink single hopping, uplink group hopping, or downlink group hopping; and the second SIB1 is used to indicate enabling of frequency hopping or disabling of frequency hopping. In other words, the second SIB 1 is simplified relative to the first SIB 1. In this way, because system messages to which different MIBs belong include different SIB Is, the terminal device parses a SIB 1 based on the SIB 1 with a corresponding structure, thereby improving communication efficiency.

In some possible implementations, the first SIB1 indicates access control of the terminal in a plurality of types of PLMNs, and the second SIB1 indicates access control of the terminal in one type of PLMN

The field used to indicate an access control parameter in the first SIB1 may indicate access control of the terminal in a plurality of different types of public land mobile networks (public land mobile network, PLMN) and indicate control of a special type of access control (access control, AC). The field used to indicate an access control parameter in the second SIB 1 may indicate access control of the terminal in one type of PLMN. In this way, a field of the second system message is shorter, thereby further reducing resource occupation of a system message.

In some possible implementations, the field used to indicate a valid carrier list in the first SIB2 indicates 480 carriers, and the field used to indicate a valid carrier list in the second SIB 1 indicates 29 carriers.

In the first SIB2, 480 bits may be used to indicate the 480 carriers. In the second SIB1, 160 carriers may be used to indicate the 29 carriers. Herein, each carrier is indicated by using five bits in a differential manner. In this way, a field of the second system message is shorter, thereby further reducing resource occupation of a system message.

In some possible implementations, frequency domain resources occupied by the second SIB1 and the second MIB are on one carrier. A time domain resource occupied by the second SIB1 is 64 frames. A time domain resource occupied by the second MIB is 64 frames. The time domain resource occupied by the second MIB and the time domain resource occupied by the second SIB 1 are consecutive.

A time domain resource occupied by each second MIB included in the second-type system message is eight frames, and 64 consecutive frames are occupied. Each second SIB 1 in the second-type system message also occupies eight frames, and 64 consecutive frames are occupied. In addition, 64 frames occupied by the second MIBs and 64 frames occupied by the second SIB Is are consecutive. For example, the second MIBs may be frames numbered 0 to 63, and a time domain resource occupied by the SIB Is may be frames numbered 64 to 127. In this way, when the second MIBs and the second SIB Is are transmitted, the second MIBs and the second SIB Is may be interleaved and transmitted. To be specific, the second MIBs of 64 frames are transmitted, and then the second SIB 1s of 64 frames are transmitted; and afterwards, the second MIBs of 64 frames are transmitted, and then the second SIB Is of 64 frames are transmitted; and so on.

In some possible implementations, that the terminal processes the system message based on the type of the MIB includes: When the type of the MIB is the first type, the terminal decodes the MIB based on a message structure of the first-type MIB; or when the type of the MIB is the second type, the terminal decodes the MIB based on a structure of the system message of the second-type MIB.

If the MIB is the first-type MIB, the terminal parses the MIB based on information included in the message structure of the first-type MIB. If the MIB is the second-type MIB, the terminal parses the MIB based on information included in the message structure of the second-type MIB. In this way, the terminal can accurately parse the MIB, thereby improving communication efficiency.

In some possible implementations, the method further includes: When the type of the MIB is the second type, the terminal obtains the second SIB1.

When the MIB is in the second type, the system message to which the MIB belongs is also of the second type. In this way, after receiving the MIB, the terminal may further parse other information in the system message based on a structure of the other information included in the second-type system message, thereby improving communication efficiency.

According to a second aspect, a system message processing method is provided. The method includes: A network device sends a master information block MIB to a terminal. The network device sends indication information to the terminal. The indication information is used to indicate a type of the MIB. The type of the MIB is used by the terminal to process the MIB.

The network device sends the MIB and the indication information to the terminal. The indication information is used to indicate the type of the MIB. In this way, the terminal can process the MIB based on the type of the MIB. In other words, in this embodiment of this application, the terminal may decode the MIB based on the type of the MIB. Therefore, the following case is avoided: The MIB is decoded in a fixed manner, and consequently, the MIB cannot be accurately parsed. In this way, communication efficiency is improved.

In some possible implementations, that the network device sends the indication information to the terminal includes: The network device sends a logical channel message to the terminal, where the logical channel message carries the indication information; or the network device sends a broadcast channel to the terminal, where content carried in the broadcast channel carries the indication information.

The network device may include the indication information in the logical channel message, the MIB, or the content carried in the broadcast channel. In this case, the indication information does not need to be dedicatedly sent, thereby reducing signaling overheads.

In some possible implementations, the indication information includes at least one field. A value of the at least one field is used to indicate the type of the MIB.

The network device may indicate the type of the MIB in an implicit manner. In other words, no dedicated indication information is needed, thereby reducing signaling overheads.

In some possible implementations, the type of the MIB includes a first type and a second type. A system message to which a first-type MIB belongs further includes a first SIB1, a first SIB2, a first SIB3, and a first SIB4. A system message to which a second-type MIB belongs further includes a second system information block SIB1.

There may be a plurality of types of MIBs. The value of the at least one field may be determined based on a quantity of the types of MIBs. For example, when there are two types of MIBs (for example, a first-type MIB and a second-type MIB), the indication information may include one bit. The type of the MIB is indicated by using a value of the bit, thereby reducing resource occupation for indicating the type of the MIB.

In some possible implementations, the second MIB includes some fields of the first MIB and the first SIB4. The second SIB 1 includes some fields of the first SIB 1, the first SIB2, and the first SIB4. The first SIB3 includes a field used to indicate configuration information of group hopping.

The first MIB may include fields respectively used to indicate a hyper frame number, a system frame number, an antenna port, a system message value tag, an access enabling indication, a scheduling indication of a SIB 1, a cell identity (identity, ID), and a carrier indication. The first SIB 1 includes a field used to indicate an access control parameter and a field used to indicate enabling of frequency hopping. The first SIB2 includes a field used to indicate a valid carrier list. The first SIB3 includes the field used to indicate the configuration information of group hopping. The first SIB4 includes a field used to indicate a common resource, a field used to indicate configuration information of a paging channel, and a field used to indicate configuration information of a broadcast channel. A second-type system message may include some fields of a first-type system message. For example, the second MIB may include fields used to indicate a hyper frame number, a system frame number, a system message value tag, an access enabling indication, a scheduling indication of a SIB1, and a cell ID; a field used to indicate configuration of a broadcast channel; and a field used to indicate configuration of a paging channel. The second SIB 1 may include a field used to indicate an access control parameter, a field used to indicate enabling of frequency hopping, a field used to indicate a valid carrier list, and a field used to indicate a common resource. In other words, some unnecessary fields are omitted in the second-type system message, thereby reducing resource occupation of the second-type system message.

In some possible implementations, the first SIB4 includes a configuration field of a plurality of sets of common resources, and the second SIB 1 further includes a configuration field of one set of common resources.

The second-type system message may include some fields of the first-type system message. In other words, some unnecessary fields are omitted in the second-type system message, thereby reducing resource occupation of the second-type system message.

In some possible implementations, the first SIB1 includes a field used to indicate enabling of uplink single hopping, downlink single hopping, uplink group hopping, or downlink group hopping; and the second SIB 1 further includes a field used to indicate whether to enable frequency hopping.

The first SIB4 in the first-type system message may include the configuration field of the plurality of sets of common resources, and the second SIB1 in the second-type system message may include the configuration field of the one set of common resources. In other words, both the first-type system message and the second-type system message can be used to implement configuration of common resources. The terminal may accurately parse the MIB based on the type of the MIB, thereby improving communication efficiency.

In some possible implementations, the first SIB1 indicates access control of the terminal in a plurality of types of PLMNs, and the second SIB1 indicates access control of the terminal in one type of PLMN

The field used to indicate an access control parameter in the first SIB1 may indicate access control of the terminal in a plurality of different types of public land mobile networks (public land mobile network, PLMN) and indicate control of a special type of access control (access control, AC). The field used to indicate an access control parameter in the second SIB 1 may indicate access control of the terminal in one type of PLMN. In this way, a field of the second system message is shorter, thereby further reducing resource occupation of a system message.

In some possible implementations, the field used to indicate a valid carrier list in the first SIB2 indicates 480 carriers, and the field used to indicate a valid carrier list in the second SIB 1 indicates 29 carriers.

In the first SIB2, 480 bits may be used to indicate the 480 carriers. In the second SIB 1, 160 carriers may be used to indicate the 29 carriers. Herein, each carrier is indicated by using five bits in a differential manner. In this way, a field of the second system message is shorter, thereby further reducing resource occupation of a system message.

In some possible implementations, frequency domain resources occupied by the second SIB1 and the second MIB are on one carrier. A time domain resource occupied by the second SIB1 is 64 frames. A time domain resource occupied by the second MIB is 64 frames. The time domain resource occupied by the second MIB and the time domain resource occupied by the second SIB 1 are consecutive.

A time domain resource occupied by each second MIB included in the second-type system message is eight frames, and 64 consecutive frames are occupied. Each second SIB 1 in the second-type system message also occupies eight frames, and 64 consecutive frames are occupied. In addition, 64 frames occupied by the second MIBs and 64 frames occupied by the second SIB 1s are consecutive. For example, the second MIBs may be frames numbered 0 to 63, and a time domain resource occupied by the SIB 1s may be frames numbered 64 to 127. In this way, when the second MIBs and the second SIB Is are transmitted, the second MIBs and the second SIB Is may be interleaved and transmitted. To be specific, the second MIBs of 64 frames are transmitted, and then the second SIB 1s of 64 frames are transmitted; and afterwards, the second MIBs of 64 frames are transmitted, and then the second SIB 1s of 64 frames are transmitted; and so on.

According to a third aspect, a system message processing method is provided. The method includes: A terminal device receives a system message. The terminal device obtains indication information. The indication information is used to indicate a type of the system message. The terminal device processes the system message based on the type of the system message.

The terminal obtains the indication information used to indicate the type of the system message, and processes the system message. Therefore, the following case is avoided: The system message is parsed in a fixed parsing manner, and consequently, the system message is inaccurately parsed. In this embodiment of this application, communication efficiency is improved.

According to a fourth aspect, a system message processing method is provided. The method includes: A network device sends a system message to a terminal device. The network device sends indication information to the terminal device. The indication information is used to indicate a type of the system message. The type of the system message is used by the terminal device to process the system message.

The network device sends, to the terminal, the indication information used to indicate the type of the system message, so that the terminal processes the system message based on the type of the system message. Therefore, the following case is avoided: The system message is parsed in a fixed parsing manner, and consequently, the system message is inaccurately parsed. In this embodiment of this application, communication efficiency is improved.

According to a fifth aspect, a system message processing apparatus is provided. The apparatus may be a terminal, or may be a chip in a terminal. The apparatus has a function for implementing any one of the first aspect and the possible implementations of the first aspect. The function may be implemented by using hardware, or may be implemented by hardware executing corresponding software. The hardware or the software includes one or more modules corresponding to the function.

In a possible design, the apparatus includes a processing module and a transceiver module. The transceiver module may be, for example, at least one of a transceiver, a receiver, or a transmitter. The transceiver module may include a radio frequency circuit or an antenna. The processing module may be a processor.

Optionally, the apparatus further includes a storage module. The storage module may be, for example, a memory. When the storage module is included, the storage module is configured to store instructions. The processing module is connected to the storage module. The processing module may execute the instructions stored in the storage module or another instruction, so that the apparatus performs the method according to any one of the first aspect and the possible implementations of the first aspect.

In another possible design, when the apparatus is a chip, the chip includes a processing module. Optionally, the chip further includes a transceiver module. The transceiver module may be, for example, an input/output interface, a pin, or a circuit in the chip. The processing module may be, for example, a processor. The processing module may execute instructions, so that the chip in the terminal performs the method according to any one of the first aspect and the possible implementations of the first aspect.

Optionally, the processing module may execute the instructions in the storage module. The storage module may be a storage module in the chip, for example, a register or a cache. The storage module may alternatively be located in a communications device but outside the chip, for example, may be a read-only memory (read-only memory, ROM), another type of static storage device that can store static information and instructions, or a random access memory (random access memory, RAM).

Any one of the foregoing mentioned processors may be a general-purpose central processing unit (CPU), a microprocessor, an application-specific integrated circuit (application-specific integrated circuit, ASIC), or one or more integrated circuits configured to control program execution of the methods according to the foregoing aspects.

According to a sixth aspect, a system message processing apparatus is provided. The apparatus may be a network device, or may be a chip in a network device. The apparatus has a function for implementing any one of the second aspect and the possible implementations of the second aspect. The function may be implemented by using hardware, or may be implemented by hardware executing corresponding software. The hardware or the software includes one or more modules corresponding to the function.

In a possible design, the apparatus includes a processing module and a transceiver module. The transceiver module may be, for example, at least one of a transceiver, a receiver, or a transmitter. The transceiver module may include a radio frequency circuit or an antenna. The processing module may be a processor.

Optionally, the apparatus further includes a storage module. The storage module may be, for example, a memory. When the storage module is included, the storage module is configured to store instructions. The processing module is connected to the storage module. The processing module may execute the instructions stored in the storage module or another instruction, so that the apparatus performs the method according to any one of the second aspect and the possible implementations of the second aspect. In this design, the apparatus may be a network device.

In another possible design, when the apparatus is a chip, the chip includes a transceiver module and a processing module. The transceiver module may be, for example, an input/output interface, a pin, or a circuit in the chip. The processing module may be, for example, a processor. The processing module may execute instructions, so that the chip in the terminal performs the method according to any one of the second aspect and the possible implementations of the second aspect.

Optionally, the processing module may execute the instructions in the storage module. The storage module may be a storage module in the chip, for example, a register or a cache. The storage module may alternatively be located in a communications device but outside the chip, for example, may be a read-only memory, another type of static storage device that can store static information and instructions, or a random access memory.

Any one of the foregoing mentioned processors may be a general-purpose central processing unit, a microprocessor, an application-specific integrated circuit, or one or more integrated circuits for controlling program execution of the methods according to the foregoing aspects.

According to a seventh aspect, a system message processing apparatus is provided. The apparatus may be a terminal, or may be a chip in a terminal. The apparatus has a function for implementing any one of the third aspect and the possible implementations of the third aspect. The function may be implemented by using hardware, or may be implemented by hardware executing corresponding software. The hardware or the software includes one or more modules corresponding to the function.

In a possible design, the apparatus includes a processing module and a transceiver module. The transceiver module may be, for example, at least one of a transceiver, a receiver, or a transmitter. The transceiver module may include a radio frequency circuit or an antenna. The processing module may be a processor.

Optionally, the apparatus further includes a storage module. The storage module may be, for example, a memory. When the storage module is included, the storage module is configured to store instructions. The processing module is connected to the storage module. The processing module may execute the instructions stored in the storage module or another instruction, so that the apparatus performs the method according to any one of the third aspect and the possible implementations of the third aspect.

In another possible design, when the apparatus is a chip, the chip includes a processing module. Optionally, the chip further includes a transceiver module. The transceiver module may be, for example, an input/output interface, a pin, or a circuit in the chip. The processing module may be, for example, a processor. The processing module may execute instructions, so that the chip in the terminal performs the method according to any one of the third aspect and the possible implementations of the third aspect.

Optionally, the processing module may execute the instructions in the storage module. The storage module may be a storage module in the chip, for example, a register or a cache. The storage module may alternatively be located in a communications device but outside the chip, for example, may be a read-only memory (read-only memory, ROM), another type of static storage device that can store static information and instructions, or a random access memory (random access memory, RAM).

Any one of the foregoing mentioned processors may be a general-purpose central processing unit (CPU), a microprocessor, an application-specific integrated circuit (application-specific integrated circuit, ASIC), or one or more integrated circuits configured to control program execution of the methods according to the foregoing aspects.

According to an eighth aspect, a system message processing apparatus is provided. The apparatus may be a network device, or may be a chip in a network device. The apparatus has a function for implementing any one of the fourth aspect and the possible implementations of the fourth aspect. The function may be implemented by using hardware, or may be implemented by hardware executing corresponding software. The hardware or the software includes one or more modules corresponding to the function.

In a possible design, the apparatus includes a processing module and a transceiver module. The transceiver module may be, for example, at least one of a transceiver, a receiver, or a transmitter. The transceiver module may include a radio frequency circuit or an antenna. The processing module may be a processor.

Optionally, the apparatus further includes a storage module. The storage module may be, for example, a memory. When the storage module is included, the storage module is configured to store instructions. The processing module is connected to the storage module. The processing module may execute the instructions stored in the storage module or another instruction, so that the apparatus performs the method according to any one of the fourth aspect and the possible implementations of the fourth aspect. In this design, the apparatus may be a network device.

In another possible design, when the apparatus is a chip, the chip includes a transceiver module and a processing module. The transceiver module may be, for example, an input/output interface, a pin, or a circuit in the chip. The processing module may be, for example, a processor. The processing module may execute instructions, so that the chip in the terminal performs the method according to any one of the fourth aspect and the possible implementations of the fourth aspect.

Optionally, the processing module may execute the instructions in the storage module. The storage module may be a storage module in the chip, for example, a register or a cache. The storage module may alternatively be located in a communications device but outside the chip, for example, may be a read-only memory, another type of static storage device that can store static information and instructions, or a random access memory.

Any one of the foregoing mentioned processors may be a general-purpose central processing unit, a microprocessor, an application-specific integrated circuit, or one or more integrated circuits for controlling program execution of the methods according to the foregoing aspects. According to the fifth aspect, a computer storage medium is provided. The computer storage medium stores program code. The program code is used to indicate instructions for performing the method according to any one of the fourth aspect or the possible implementations of the fourth aspect.

According to a ninth aspect, a computer storage medium is provided. The computer storage medium stores program code. The program code is used to indicate instructions for performing the method according to any one of the first aspect or the possible implementations of the first aspect.

According to a tenth aspect, a computer program product including instructions is provided. When the computer program product runs on a computer, the computer is enabled to perform the method according to any one of the first aspect or the possible implementations of the first aspect.

According to an eleventh aspect, a computer storage medium is provided. The computer storage medium stores program code. The program code is used to indicate instructions for performing the method according to any one of the second aspect or the possible implementations of the second aspect.

According to a twelfth aspect, a computer program product including instructions is provided. When the computer program product runs on a computer, the computer is enabled to perform the method according to any one of the second aspect or the possible implementations of the second aspect.

According to a thirteenth aspect, a computer storage medium is provided. The computer storage medium stores program code. The program code is used to indicate instructions for performing the method according to any one of the third aspect or the possible implementations of the third aspect.

According to a fourteenth aspect, a computer program product including instructions is provided. When the computer program product runs on a computer, the computer is enabled to perform the method according to any one of the third aspect or the possible implementations of the third aspect.

According to the fifteenth aspect, a computer storage medium is provided. The computer storage medium stores program code. The program code is used to indicate instructions for performing the method according to any one of the fourth aspect or the possible implementations of the fourth aspect.

According to a sixteenth aspect, a computer program product including instructions is provided. When the computer program product runs on a computer, the computer is enabled to perform the method according to any one of the fourth aspect or the possible implementations of the fourth aspect.

According to a seventeenth aspect, a processor is provided. The processor is coupled to a memory. The processor is configured to perform the method according to any one of the first aspect or the possible implementations of the first aspect.

According to an eighteenth aspect, a processor is provided. The processor is coupled to a memory. The processor is configured to perform the method according to any one of the second aspect or the possible implementations of the second aspect.

According to a nineteenth aspect, a processor is provided. The processor is coupled to a memory. The processor is configured to perform the method according to any one of the third aspect or the possible implementations of the third aspect.

According to a twentieth aspect, a processor is provided. The processor is coupled to a memory. The processor is configured to perform the method according to any one of the fourth aspect or the possible implementations of the fourth aspect.

According to a twenty-first aspect, a chip is provided. The chip includes a processor and a communications interface. The communications interface is configured to communicate with an external component or an internal component. The processor is configured to perform the method according to any one of the first aspect or the possible implementations of the first aspect.

Optionally, the chip may further include a memory. The memory stores instructions. The processor is configured to execute the instructions stored in the memory or another instruction. When the instructions are executed, the processor is configured to implement the method according to any one of the first aspect or the possible implementations of the first aspect.

Optionally, the chip may be integrated to a terminal.

According to a twenty-second aspect, a chip is provided. The chip includes a processor and a communications interface. The communications interface is configured to communicate with an external component or an internal component. The processor is configured to perform the method according to any one of the second aspect or the possible implementations of the second aspect.

Optionally, the chip may further include a memory. The memory stores instructions. The processor is configured to execute the instructions stored in the memory or another instruction. When the instructions are executed, the processor is configured to implement the method according to any one of the second aspect or the possible implementations of the second aspect.

Optionally, the chip may be integrated to a network device.

According to a twenty-third aspect, a chip is provided. The chip includes a processor and a communications interface. The communications interface is configured to communicate with an external component or an internal component. The processor is configured to perform the method according to the third aspect or the possible implementations of the third aspect.

Optionally, the chip may further include a memory. The memory stores instructions. The processor is configured to execute the instructions stored in the memory or another instruction. When the instructions are executed, the processor is configured to implement the method according to any one of the third aspect or the possible implementations of the third aspect.

Optionally, the chip may be integrated to a terminal.

According to a twenty-fourth aspect, a chip is provided. The chip includes a processor and a communications interface. The communications interface is configured to communicate with an external component or an internal component. The processor is configured to perform the method according to any one of the fourth aspect or the possible implementations of the fourth aspect.

Optionally, the chip may further include a memory. The memory stores instructions. The processor is configured to execute the instructions stored in the memory or another instruction. When the instructions are executed, the processor is configured to implement the method according to any one of the fourth aspect or the possible implementations of the fourth aspect.

Optionally, the chip may be integrated to a network device.

Based on the foregoing technical solutions, the terminal receives the MIB, and obtains the indication information. The indication information is used to indicate the type of the MIB. In this way, the terminal can process the MIB based on the type of the MIB. In other words, in the embodiments of this application, the terminal may decode the MIB based on the type of the MIB. Therefore, the following case is avoided: The MIB is decoded in a fixed manner, and consequently, the MIB cannot be accurately parsed. In this way, communication efficiency is improved.

**BRIEF DESCRIPTION OF DRAWINGS**

FIG. 1 is a schematic diagram of a communication system according to this application;

FIG. 2 is a schematic flowchart of a signal transmission method in a conventional solution;

FIG. 3 is a schematic flowchart of a system message processing method according to an embodiment of this application;

FIG. 4 is a schematic diagram of comparison between different types of system messages according to an embodiment of this application;

FIG. 5 is a schematic diagram of resource occupation of different types of system messages according to an embodiment of this application;

FIG. 6 is a schematic flowchart of a system message processing method according to another embodiment of this application;

FIG. 7 is a schematic diagram of a system message processing method according to a specific embodiment of this application;

FIG. 8 is a schematic block diagram of a system message processing apparatus according to an embodiment of this application;

FIG. 9 is a schematic block diagram of a system message processing apparatus according to an embodiment of this application;

FIG. 10 is a schematic block diagram of a system message processing apparatus according to an embodiment of this application;

FIG. 11 is a schematic block diagram of a system message processing apparatus according to an embodiment of this application;

FIG. 12 is a schematic block diagram of a system message processing apparatus according to a specific embodiment of this application;

FIG. 13 is a schematic block diagram of a system message processing apparatus according to another specific embodiment of this application;

FIG. 14 is a schematic block diagram of a system message processing apparatus according to another specific embodiment of this application; and

FIG. 15 is a schematic block diagram of a system message processing apparatus according to another specific embodiment of this application.

**DESCRIPTION OF EMBODIMENTS**

The following describes technical solutions of this application with reference to the accompanying drawings.

The technical solutions of the embodiments of this application may be applied to various communications systems, such as: a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a future 5th generation (5th generation, 5G) system, or a new radio (new radio, NR) system.

By way of example and not limitation, in the embodiments of this application, a terminal in the embodiments of this application may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, or a terminal in a future evolved public land mobile network (public land mobile network, PLMN). This is not limited in the embodiments of this application.

By way of example and not limitation, in the embodiments of this application, the terminal may alternatively be a wearable device. The wearable device may also be referred to as a wearable intelligent device, and is a generic term of wearable devices, for example, glasses, gloves, watches, clothes, and shoes, developed by performing intelligent design on daily wear by using a wearable technology. The wearable device is a portable device directly worn on a body or integrated into clothes or an accessory of a user. The wearable device is more than a hardware device, and implements powerful functions through software support, data exchange, and cloud-based interaction. In a broad sense, wearable intelligent devices include a large-sized device, for example, a smartwatch or smart glasses, that provide comprehensive functions and that can implement all or some functions independent of a smartphone; and include a device, for example, various types of smart bands and smart jewelry for somatic feature monitoring, that is intended for only a specific type of application function and that needs to be used in conjunction with another device such as a smartphone.

Alternatively, in the embodiments of this application, the terminal may be a terminal in an Internet of things (internet of things, IoT) system. The IoT is an important composition part of information technology development in the future, and has a main technical feature in which things are connected to a network by using a communications technology to implement an intelligent network for human-machine interconnection and thing-thing interconnection.

In the embodiments of this application, in the IoT technology, massive connections, deep coverage, and power saving of the terminal can be implemented by using, for example, a narrow band (narrow band) NB technology. For example, an NB includes only one resource block (resource block, RB). To be specific, a bandwidth of the NB is only 180 KB. To implement massive connections, terminal access needs to be discrete. In a method in the embodiments of this application, a problem of congestion caused when massive terminals access a network by using an NB in the IoT technology can be effectively resolved.

In addition, in this application, the terminal may further include sensors such as an intelligent printer, a train detector, and a gas station. Main functions include collecting data (some terminals), receiving control information and downlink data of a network device, sending electromagnetic waves, and transmitting uplink data to a network device.

The network device in the embodiments of this application may be a device configured to communicate with the terminal. The network device may be a base transceiver station (base transceiver station, BTS) in global system for mobile communications (global system for mobile communications, GSM) or code division multiple access (code division multiple access, CDMA); or may be a NodeB (NodeB, NB) in a wideband code division multiple access (wideband code division multiple access, WCDMA) system; or may be an evolved NodeB (evolved NodeB, eNB or eNodeB) in an LTE system; or may be a radio controller in a cloud radio access network (cloud radio access network, CRAN) scenario. Alternatively, the network device may be a relay node, an access point (access point, AP), a Wi-Fi signal source device, a vehicle-mounted device, a wearable device, a network device in a future 5G network, a network device in a future evolved PLMN network, or the like. Alternatively, the network device may be an access point in a WLAN, or may be a gNB in a new radio (new radio, NR) system. This is not limited in the embodiments of this application.

In addition, in the embodiments of this application, the network device provides a service for a cell. The terminal communicates with the network device by using a transmission resource (for example, a frequency domain resource or a spectrum resource) used in the cell. The cell may be a cell corresponding to the network device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. The small cells have features such as small coverage and low transmit power, and are used to provide high-rate data transmission services.

In addition, in the LTE system or the 5G system, a plurality of cells may simultaneously work on a same frequency on a carrier. In some special scenarios, it may also be considered that concepts of carrier and cell are equivalent. For example, in a carrier aggregation (carrier aggregation, CA) scenario, when a secondary component carrier is configured for UE, a carrier index of the secondary component carrier and a cell identity (cell identification, Cell ID) of a secondary serving cell working on the secondary component carrier are both carried. In this case, it may be considered that the concepts of carrier and cell are equivalent. For example, for the UE, accessing a carrier is equivalent to accessing a cell.

A core network device may be connected to a plurality of network devices, and configured to control the network devices, and distribute, to the network devices, data received from a network side (for example, the Internet).

In addition, in this application, the network device may include a base station (gNB), such as a macro base station, a micro base station, an indoor hotspot, and a relay node. A function is sending a radio wave to a terminal to implement downlink data transmission, sending scheduling information to control uplink transmission, receiving a radio wave sent by the terminal, and receiving uplink data transmission.

The foregoing listed functions and specific implementations of the terminal, the access network device, and the core network device are merely described by using examples. This is not limited in this application.

In the embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing by using a process (process), for example, a Linux operating system, a Unix operating system, an Android operating system, an iOS operating system, or a Windows operating system. The application layer includes applications such as a browser, an address book, word processing software, and instant messaging software. In addition, the embodiments of this application do not particularly limit a specific structure of an execution entity of the method provided in the embodiments of this application, provided that a program recording code of the method provided in the embodiments of this application can be run to implement communication according to the method provided in the embodiments of this application. For example, the execution entity of the method provided in the embodiments of this application may be a terminal or a network device, or may be a function module that can invoke and execute a program in the terminal or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive).

In addition, various storage media described in this specification may indicate one or more devices and/or other machine-readable media that are configured to store information. The term "machine-readable media" may include but are not limited to a radio channel, and various other media that can store, contain, and/or carry instructions and/or data.

It should be noted that in the embodiments of this application, a plurality of application programs may be run at the application layer. In this case, an application program for performing the method in the embodiments of this application and an application program configured to control a receive end device to complete an action corresponding to received data may be different application programs.

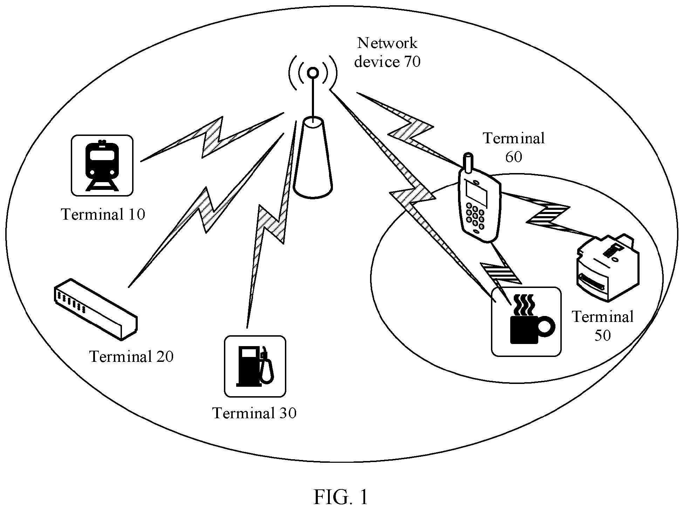

FIG. 1 is a schematic diagram of a communication system according to this application. The communication system in FIG. 1 may include at least one terminal (for example, a terminal 10, a terminal 20, a terminal 30, a terminal 40, a terminal 50, and a terminal 60) and a network device 70. The network device 70 is configured to: provide a communication service for the terminal, and access a core network. The terminal may access a network by searching for a synchronization signal, a broadcast signal, and the like that are sent by the network device 70, to communicate with the network. The terminal 10, the terminal 20, the terminal 30, the terminal 40, and the terminal 60 in FIG. 1 may perform uplink and downlink transmission with the network device 70. For example, the network device 70 may send downlink signals to the terminal 10, the terminal 20, the terminal 30, the terminal 40, and the terminal 60; or may receive uplink signals sent by the terminal 10, the terminal 20, the terminal 30, the terminal 40, and the terminal 60.

In addition, the terminal 40, the terminal 50, and the terminal 60 may also be considered as a communications system. The terminal 60 may send downlink signals to the terminal 40 and the terminal 50, or may receive uplink signals sent by the terminal 40 and the terminal 50.

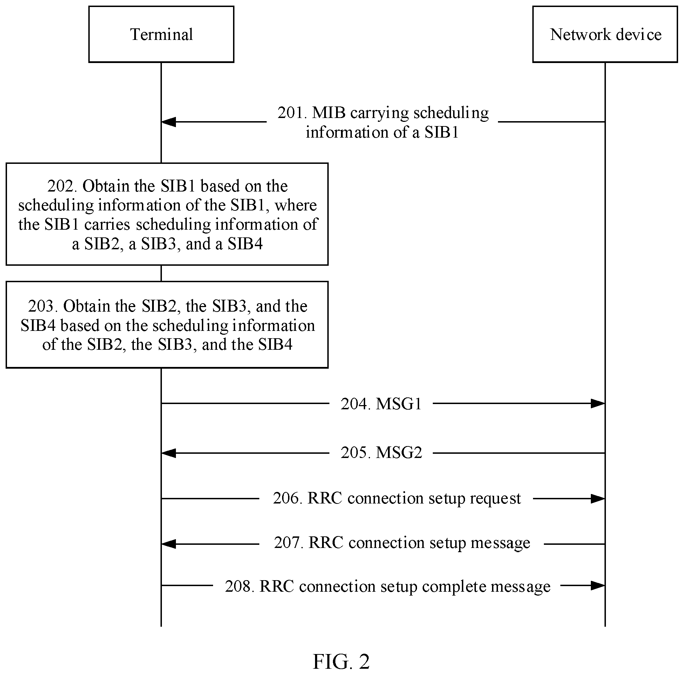

FIG. 2 is a schematic flowchart of a signal transmission method in a conventional solution.

201. A terminal receives a system message (MIB). The MIB carries scheduling information of a SIB1.

Specifically, in a narrow band Internet of things (narrow band Internet of things, NB-IoT), there is only one MIB in one cell.

202. The terminal obtains the SIB 1 based on the scheduling information of the SIB1. The SIB1 carries scheduling information of a SIB2, a SIB3, and a SIB4.

203. The terminal obtains the SIB2, the SIB3, and the SIB4 based on the scheduling information of the SIB2, the SIB3, and the SIB4.

204. The terminal sends (message, MSG) 1 to a network device, that is, initiates random access.

205. The network device sends a response message of the MSG1 to the terminal, that is, a message (message, MSG) 2. The MSG2 includes a timing advance (timed advance, TA) and an uplink resource.

206. The terminal sends a radio resource control (radio resource control, RRC) connection setup request (connection request) to the network device on the uplink resource based on the TA.

207. The network device sends a conflict resolution message (or referred to as an RRC connection setup message) to the terminal. The conflict resolution message is used to indicate that the random access succeeds.

208. The terminal sends an RRC connection setup complete message to the network device after the terminal resolves a conflict.

It should be noted that the MIB and the SIB1 to the SIB4 may be referred to as "system messages". The terminal may obtain the system message to perform random access and RRC connection setup, and may further receive a paging message. This is not limited in this application.

However, in the conventional solution, only one type of system message is considered. If the terminal is used in scenarios with different types of system messages, the terminal cannot distinguish between the system messages, and therefore cannot accurately parse the system messages, thereby reducing communication efficiency.

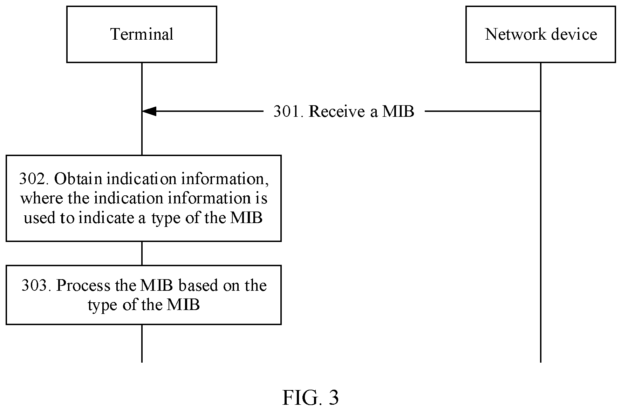

FIG. 3 is a schematic flowchart of a system message processing method according to an embodiment of this application.

301. A terminal receives a MIB. Correspondingly, a network device sends the MIB.

Specifically, the terminal receives a system message. The system message mainly includes a master information block MIB and a system information block SIB.

Optionally, the system message includes a plurality of types of system messages.

Specifically, there may be a plurality of types of system messages. For example, when there are sufficient spectrum resources in China, the system message may be a normal system message (system message normal); when there are insufficient spectrum resources in other countries, the system message may be a reduced system message (system message reduced).

The normal system message (a first-type system message) includes a first MIB, a first SIB 1, a first SIB2, a first SIB3, and a first SIB4. The first MIB may include fields respectively used to indicate a hyper frame number, a system frame number, an antenna port, a system message value tag, an access enabling indication, a scheduling indication of a SIB1, a cell identity (identity, ID), and a carrier indication. The first SIB1 includes a field used to indicate an access control parameter and a field used to indicate enabling of frequency hopping. The first SIB2 includes a field used to indicate a valid carrier list. The first SIB3 includes a field used to indicate configuration information of group hopping. The first SIB4 includes a field used to indicate a common resource, a field used to indicate configuration information of a paging channel, and a field used to indicate configuration information of a broadcast channel.

The reduced system message (a second-type system message) includes a second MIB and a second SIB1. The second MIB may include some fields of the first MIB, and the second SIB 1 includes some fields of the first SIB 1 and the first SIB2. For example, the second MIB may include fields used to indicate a hyper frame number, a system frame number, a system message value tag, an access enabling indication, a scheduling indication of a SIB1, and a cell ID; a field used to indicate configuration of a broadcast channel; and a field used to indicate configuration of a paging channel. The second SIB1 may include a field used to indicate an access control parameter, a field used to indicate enabling of frequency hopping, a field used to indicate a valid carrier list, and a field used to indicate a common resource. In other words, the second-type system message includes some fields of the MIB, the SIB1, the SIB2, and the SIB4 in the first-type system message; and has functions corresponding to these fields. In addition, the second-type system message does not include a field of the SIB3, that is, the first-type system message is reduced and reconstructed to obtain the second-type system message. In this way, a field of the second-type system message is shorter and occupies fewer resources.

In other words, there are also two types of MIBs. A first-type system message includes a first-type MIB, and a second-type system message includes a second-type MIB.

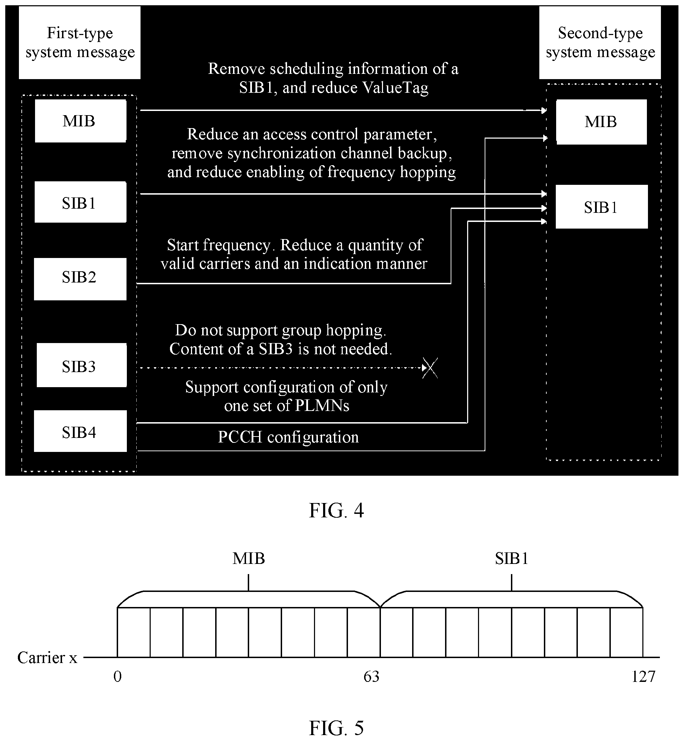

Optionally, for example, as shown in FIG. 4, the field used to indicate a common resource in the first SIB4 may specifically indicate a plurality of sets of common resources, and the field used to indicate a common resource in the second MIB may indicate one set of common resources. In other words, the field used to indicate a common resource in the second system message can be shorter, thereby further reducing resource occupation of a system message.

Optionally, the field used to indicate an access control parameter in the first SIB1 may indicate access control of the terminal in a plurality of different types of public land mobile networks (public land mobile network, PLMN) and indicate control of a special type of access control (access control, AC). For example, as shown in FIG. 4, the field used to indicate an access control parameter in the second SIB 1 may indicate access control of the terminal in one type of PLMN. In this way, a field of the second system message is shorter, thereby further reducing resource occupation of a system message.

Optionally, the field used to indicate frequency hopping in the first SIB1 may indicate enabling of uplink single hopping, downlink single hopping, uplink group hopping, or downlink group hopping. For example, as shown in FIG. 4, the field used to indicate frequency hopping in the second SIB1 may be a field for indicating whether to enable frequency hopping. In other words, the second SIB 1 indicates only enabling of frequency hopping or disabling of frequency hopping. Single hopping or group hopping is not differentiated, and uplink hopping or downlink hopping is not differentiated either. In this way, the field of the second system message is shorter, thereby further reducing resource occupation of a system message.

Optionally, the field used to indicate a valid carrier list in the first SIB2 may indicate 480 carriers, and the field used to indicate a valid carrier list in the second SIB1 may indicate 29 carriers.

Specifically, in the first SIB2, 480 bits may be used to indicate the 480 carriers. In the second SIB1, 160 carriers may be used to indicate the 29 carriers. Herein, each carrier is indicated by using five bits in a differential manner. In this way, a field of the second system message is shorter, thereby further reducing resource occupation of a system message.

For example, the following separately shows the first-type system message (MasterInformationBlock-DSA-Normal) and the second-type system message (MasterInformationBlock-DSA-SIR).

```
-- ASN1START


MasterInformationBlock-DSA-Normal ::=              SEQUENCE {

    hyperFrameNumber                    BIT STRING (SIZE (10)),

    systemFrameNumber-MSB               BIT STRING (SIZE (4)),

    antennaPortsCount                       ENUMERATED   {an1,   an2,   spare2,
spare1},

    systemInfoValueTag                  INTEGER (0..15),

    ab-Enabled                          BOOLEAN,

    schedulingInfoSIB1                  SchedulingInfoSIB1-DSA,

    physCellID-MSB                      INTEGER (0..6),

    si-CarrierIndex-MSB                 BIT STRING (SIZE (4)),

    spare                               BIT STRING (SIZE (4))

}



-- ASN1STOP
```

```
-- ASN1START

MasterInformationBlock-DSA-SIR ::=          SEQUENCE {

        hyperFrameNumber                        BIT STRING (SIZE (10)),

        systemFrameNumber-MSB                   BIT STRING (SIZE (3)),

        ab-Enabled                              BOOLEAN,

        systemInfoValueTag                      INTEGER (0..7),

        physCellID-MSB                          INTEGER (0..6),

        p-Max                               P-Max,

        powerClass33dBm-Offset              ENUMERATED{dB0, dB2, dB4, dB6, dB8, dB10,
dB12, dB15},

        qoffsetTemp33dBm                        INTEGER (-7..0),

        bcch-Config                             BCCH-Config-DSA,

        pcch-Config                        PCCH-Config-DSA-SIR,

        spare                                   BIT STRING (SIZE (8))


        }


PCCH-Config-DSA-SIR ::=              SEQUENCE {
        defaultPagingCycle              ENUMERATED {rf8, rf16, rf32, rf64,

                                            rf128, rf256, spare2, spare1},

        nB                                  ENUMERATED {

                                                oneT, halfT, quarterT, one8thT,

                                                one16thT, one32ndT, one64thT,

                                                one128thT, one256thT, spare7, spare6,
spare5,
```

```
                                                    spare4, spare3, spare2, spare1},

          pdcch-NumRepetitionPaging          ENUMERATED {r1, r2, r4, r8, r16, r32, r64, spare},

          startCarrierIndex                        INTEGER (0..31)



        }
```

More specifically, the following Table 1 shows comparison between functions of the first-type system message and functions of the second-type system message.

**Table 1**

| Parameter or function | Second-type system message | First-type system message |
| --- | --- | --- |
| Primary synchronization signal (primary synchronization signal, PSS)/Secondary synchronization signal (secondary synchronous signal, SSS) and system message backup | Do not support | Support |
| Quantity of carriers occupied by a PSS/an SSS and a MIB/SIB | Two 12.5 kHz carriers | Four to six 12.5 kHz carriers (regardless of backup) |
| System frame number | Three bits | Four bits |
| Quantity of antenna ports (antenna ports count) | Implicit indication | Explicit indication |
| System message value tag (system info value tag) | Three bits | Four bits |
| Scheduling information of a SIB 1 to a SIB4 | Scheduling information of the SIB 1 is configured by default, and the SIB2 to the SIB4 are not supported. | Scheduling information of the SIB 1 is configured in a MIB, and scheduling information of the SIB2 to the SIB4 is configured in the SIB1. |
| Service isolation | Do not support. There is only configuration of one PLMN | Support. Configuration of a maximum of four PLMNs is supported. |
| Access control parameter | Reduce the access control parameter, remove a control parameter of a special type of AC, and perform access control on UE in one PLMN | Support access control on UEs in different PLMNs, and support a special type of AC control. |
| Time alignment timer (time alignment timer common) | Default configuration | Support flexible configuration. |
| Enabling of frequency hopping | Only one bit indicates whether to enable frequency hopping. | Differentiate indications of uplink single hopping, downlink single hopping, uplink group hopping, and downlink group hopping. |
| Configuration of group hopping | Do not support configuration of a carrier group frequency hopping resource and a parameter. | Support configuration of a carrier group frequency hopping resource and a parameter. |

(continued)

| Parameter or function | Second-type system message | First-type system message |
|---|---|---|
| Valid carrier list | 32*5= 160 bits are used in total to indicate a maximum of 29 (pairs of) valid carriers. Each (pair of) carrier(s) is indicated by using five bits in a differential manner. | A 480-bit bitmap is used to indicate a maximum of 480 (pairs of) carriers. Each (pair of) carrier(s) is indicated by using one bit. |
| Physical random access channel (physical random access channel, PRACH) carrier and scheduling random access response (random access response, RAR) physical downlink control channel (physical downlink control channel, PDCCH) carrier | Each coverage level corresponds to one carrier. | Each coverage level supports one to 16 carriers. |
| Paging (paging) carrier | Only one carrier is supported. A quantity of carriers does not need to be configured. | Support configuration of one to 16 carriers. |
| Duplex mode configuration and paired carrier spacing configuration | Duplex mode configuration and paired carrier spacing configuration are newly added. | Duplex mode configuration and paired carrier spacing configuration are newly added. |
| Power control and cell selection/reselection configuration for a 33 dBm terminal | Power control and cell selection/ reselection configuration for a 33 dBm terminal are newly added. | Power control and cell selection/reselection configuration for a 33 dBm terminal are newly added. |

It should be understood that there may further be another type of system message in this embodiment of this application. This is not limited in this application.

Optionally, the first MIB alone occupies one carrier on a frequency domain resource, and the second MIB and the second SIB1 jointly occupy one carrier on a frequency domain resource. The second MIB and the second SIB 1 each occupy 64 frames on a time domain resource. The time domain resources occupied by the second MIB and the second SIB 1 are consecutive.

Specifically, as shown in FIG. 5, a time domain resource occupied by each second MIB included in the second-type system message is eight frames, and 64 consecutive frames are occupied. Each second SIB 1 in the second-type system message also occupies eight frames, and 64 consecutive frames are occupied. In addition, 64 frames occupied by the second MIBs and 64 frames occupied by the second SIB Is are consecutive. For example, the second MIBs may be frames numbered 0 to 63, and a time domain resource occupied by the SIB Is may be frames numbered 64 to 127. In this way, when the second MIBs and the second SIB Is are transmitted, the second MIBs and the second SIB Is may be interleaved and transmitted. To be specific, the second MIBs of 64 frames are transmitted, and then the second SIB Is of 64 frames are transmitted; and afterwards, the second MIBs of 64 frames are transmitted, and then the second SIB1s of 64 frames are transmitted; and so on.

Optionally, the first-type system message has the same transport block size (transmit block size, TBS) as the second-type system message.

302. The terminal obtains indication information. The indication information is used to indicate a type of the MIB.

Optionally, the indication information may include at least one field. A value of the at least one field indicates the type of the MIB.

Specifically, the indication information may explicitly indicate the type of the MIB, that is, different values of the field indicate different types of MIBs. There may be a plurality of types of MIBs. The value of the at least one field may be determined based on a quantity of the types of the MIBs. For example, when there are two types of MIBs (for example, a first-type MIB and a second-type MIB), the indication information may include one bit. The type of the MIB is indicated by using a value of the bit. For example, the type of the MIB is the first type when the value of the bit is "0", or the type of the MIB is the second type when the value of the bit is "1".

Optionally, the terminal obtains the indication information from a logical channel message.

Specifically, the network device may include the indication information in a logical channel message; and the terminal receives the logical channel message, and may parse out the indication information from the logical channel message.

Optionally, the terminal obtains the indication information from the master information block MIB in the system message, or obtains the indication message from channel content carried in a physical broadcast channel (physical broadcast channel, PBCH).

Optionally, the terminal determines the indication information based on a resource location for receiving the MIB.

Specifically, the indication information may implicitly indicate the type of the MIB. A physical resource for receiving the MIB by the terminal may include at least one of a time domain resource, a frequency domain resource, or a code domain resource. A mapping relationship may exist between different types of MIBs and physical resource locations of the MIBs. In this way, the terminal may determine the type of the MIB based on the resource location of the physical resource for receiving the MIB.

For example, a frequency domain offset between the first-type MIB and a synchronization channel is an offset (offset) 1, and a frequency domain offset between the second-type MIB and the synchronization channel is an offset2. If the terminal receives the MIB at a location of the offset1, the received MIB is of the first type. If the terminal receives the MIB at a location of the offset2, the received MIB is of the second type.

For another example, the first-type MIB uses a scrambling code 1, and the second-type MIB uses a scrambling code 2. If the received MIB is scrambled by using the scrambling code 1, the received MIB is of the first type. If the received MIB is scrambled by using the scrambling code 2, the received MIB is of the second type.

For still another example, a time domain resource occupied by the first-type MIB is eight frames, and a time domain resource occupied by the second-type MIB is four frames. If the time domain resource occupied by the received MIB is eight frames, the received MIB is of the first type. If the time domain resource occupied by the received MIB is four frames, the received MIB is of the second type.

Optionally, the terminal determines the indication information based on a sequence of a received synchronization signal.

Specifically, that the indication information implicitly indicates the type of the MIB may further be that the terminal determines the type of the MIB based on the sequence of the received synchronization signal. Different sequences of synchronization signals may be different base sequences of synchronization signals, different sequence lengths of synchronization signals, different base sequence shift manners of synchronization signals, inverted sequences, or the like. Different resource locations of MIBs and/or different types of MIBs may have a mapping relationship with different sequences of synchronization signals. In this way, the terminal may determine the resource location of the MIB and/or the type of the MIB based on the received synchronization signal. If the terminal determines the resource location of the MIB based on the sequence of the synchronization signal, the terminal may determine the type of the MIB based on the resource location of the MIB, that is, determine the indication information. In addition, the terminal determines the resource location of the MIB, and may receive the MIB at the corresponding resource location.

Specifically, if a primary synchronization signal and/or a secondary synchronization signal are/is a sequence with a length of m, and m is a positive integer, there are m—1 base sequences in total. The sequence with the length of m may be a ZC sequence or another sequence. This is not limited. When the sequence of the synchronization signal is one of k (k>0) base sequences, there is a corresponding resource location of a MIB and/or a corresponding type of a MIB, for example, a first MIB. When the sequence of the synchronization signal is one of q (q>0) base sequences, there is another corresponding resource location of a MIB and/or another corresponding type of a MIB, for example, a third MIB. m is greater than k+q, and the k base sequences do not intersect with the q base sequences (different sequences).

For example, a first secondary synchronization signal is defined as follows:

$$SSS_1(n) = e^{-j \frac{u_1 n(n+1)}{41}}, n = 0, 1, ..., 40;$$

$$SSS_2(n) = e^{-j \frac{u_2 n(n+1)}{37}}, n = 0, 1, ..., 36;$$

$$u_1 = (N_{ID}^{(1)} \bmod 36) + 1;$$

and

$$u_2 = \left\lfloor n_f^{LSB[5:0]} / 2 \right\rfloor + 1.$$

$n_f^{LSB[5:0]}$ is six low-order bits in a bit number representing a frame number. Decimal values corresponding to the six low-order bits are 0 to 63. A complete frame number is indicated by using 10 bits. $\lfloor\rfloor$ is a rounding down symbol. Therefore, a range of $u_2$ is 1 to 32. It can be learned from the $SSS_2$ formula that $SSS_2$ is a ZC sequence with a length of 37, and includes 36 base sequences in total. Based on the value range of $u_2$, it may be learned that $SSS_2$ includes only 32 base sequences (denoted as a first sequence set). If the UE determines through blind detection that $SSS_2$ is one of the 32 base sequences, the UE may learn of a corresponding MIB resource location and/or MIB type, and receive the MIB. For example, the synchronization sequence corresponds to the first MIB.

For example, a second secondary synchronization signal is defined as follows:

$$SSS_1(n)=e^{-j\frac{u_1 n(n+1)}{41}}, n=0, 1, .., 40 \quad ;$$

$$SSS_2(n)=e^{-j\frac{u_2 n(n+1)}{37}}, n=0, 1, ..., 36;$$

$$u_1=(N_{ID}^{(1)} \bmod 36)+1;$$

and

$$u_2=\left\lfloor n_f^{LSB[5:0]} / 2 \right\rfloor+33.$$

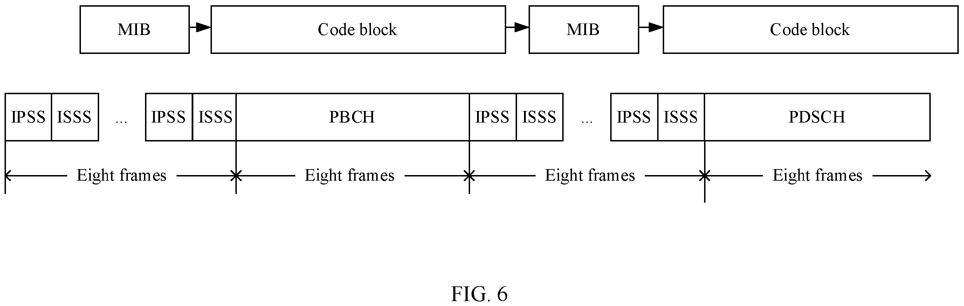

$n_f^{LSB[5:0]}$ is three low-order bits in a bit number representing a frame number. Decimal values corresponding to the three low-order bits are 0 to 7. A complete frame number is indicated by using 10 bits. $\lfloor\rfloor$ is a rounding down symbol. Therefore, a range of $u_2$ is 33 to 36. It can be learned from the $SSS_2$ formula that $SSS_2$ is a ZC sequence with a length of 37, and includes 36 base sequences in total. Based on the value range of $u_2$, it may be learned that $SSS_2$ includes only four base sequences (denoted as a second sequence set), and the four base sequences are orthogonal to the 32 base sequences of the first secondary synchronization signal $SSS_2$. If the UE determines through blind detection that the second secondary synchronization signal $SSS_2$ is one of the four base sequences, the UE may learn of a corresponding resource location of the MIB and/or a corresponding type of the MIB, and receive the MIB. For example, the synchronization sequence corresponds to the type of the MIB, that is, the third MIB. As shown in FIG. 6, the third MIB and a third SIB1 are on the same carrier as the synchronization signal. The synchronization signal is transmitted on the first eight frames in every 16 frames, and then the third MIB or the third SIB1 is transmitted on the remaining eight frames. After obtaining the synchronization signal, the UE obtains the third MIB through blind detection, and then obtains the third SIB1. The third MIB and the third SIB1 may be system messages in a reduced mode. For example, content of the second MIB is the same as or similar to content of the second SIB1. The system messages may be used as system messages sent by a relay node in a multi-hop scenario. This is not limited herein.

Optionally, the synchronization signal may be a primary synchronization signal.

Different synchronization sequences may also correspond to different SIBs, for example, a SIB1 and a SIB2.

303. The terminal processes the MIB based on the type of the MIB.

Specifically, the terminal receives the MIB, and obtains the indication information. The indication information is used to indicate the type of the MIB. In this way, the terminal can process the MIB based on the type of the MIB. In other words, in this embodiment of this application, the terminal may decode the MIB based on the type of the MIB. Therefore, the following case is avoided: The MIB is decoded in a fixed manner, and consequently, the MIB cannot be accurately parsed. In this way, communication efficiency is improved.

Optionally, step 303 may be specifically: When the type of the MIB is the first type, the terminal parses the MIB based on a message structure of the first-type MIB; or when the type of the MIB is the second type, the terminal parses the MIB based on a message structure of the second-type MIB.

Specifically, if the MIB is the first-type MIB, the terminal parses the MIB based on information included in the message structure of the first-type MIB. If the MIB is the second-type MIB, the terminal parses the MIB based on information included in the message structure of the second-type MIB.

Optionally, after receiving the MIB, the terminal may further receive the SIB based on the type of the received MIB.

Specifically, if the received MIB is the first-type MIB, the system message is the first-type system message. After receiving the MIB, the terminal may further obtain other information included in the first-type system message, for example, the first SIB1, the first SIB2, the first SIB3, and the first SIB4. If the received MIB is the second-type MIB, the system message is the second-type system message. After receiving the MIB, the terminal may further obtain the second SIB 1. For example, when the second MIB is received on frames with frame numbers of 0 to 63, the second SIB1 is received on frames with frame numbers of 64 to 127. The system messages are at a same resource location (on a same carrier).

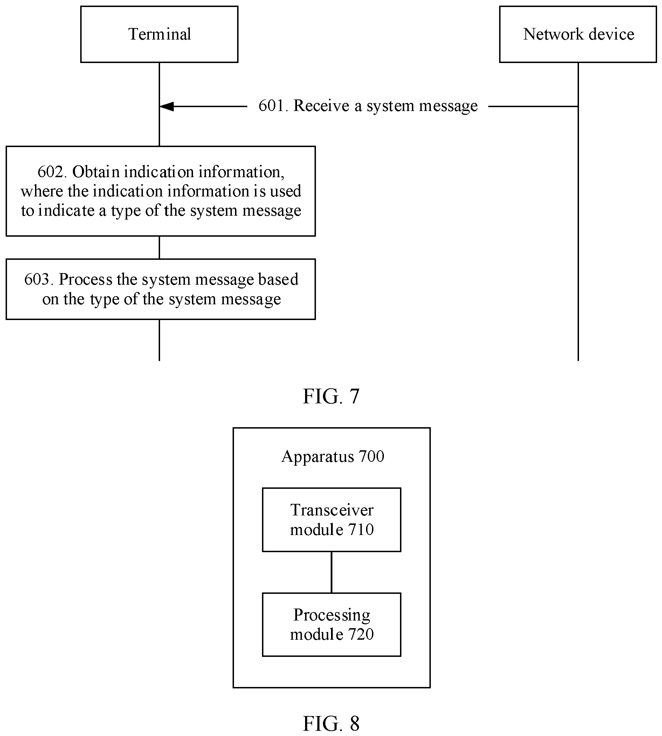

FIG. 7 is a schematic flowchart of a system message processing method according to another embodiment of this application.

It should be noted that, unless otherwise specified, meanings of the same terms in the embodiments shown in FIG. 4 and FIG. 5 are the same in the embodiments of this application. To avoid repetition, details are not described herein again.

601. A terminal receives a system message. Correspondingly, a network device sends the system message.
602. The terminal receives indication information. The indication information indicates a type of the system message.
603. The terminal processes the system message based on the type of the system message.

Specifically, the terminal device may parse the system message based on the type of the system message. For example, if the system message is of a first type, the terminal parses a MIB based on a first type of the MIB in the first-type system message, and parses other information based on a type of other information in the first-type system message, for example, parses a first SIB1, a first SIB2, a first SIB3, and a first SIB4. If the system message is of a second type, the terminal device parses a second MIB based on a second type of the MIB in the second-type system message, and parses a SIB1 based on a second type of the SIB1 in the second system message.

Therefore, in the system message processing method in this embodiment of this application, the terminal obtains the indication information used to indicate the type of the system message, and processes the system message. Therefore, the following case is avoided: The system message is parsed in a fixed parsing manner, and consequently, the system message is inaccurately parsed. In this embodiment of this application, communication efficiency is improved.

The foregoing describes the system message processing method in detail in this embodiment of this application. The following describes a system message processing apparatus in an embodiment of this application.

FIG. 8 is a schematic block diagram of a system message processing apparatus 700 according to an embodiment of this application.

It should be understood that the apparatus 700 may correspond to the terminal in the embodiment shown in FIG. 4, and may have any function of the terminal in the method. The apparatus 700 includes a transceiver module 710 and a processing module 720.

The transceiver module 710 is configured to receive a master information block MIB.

The transceiver module 710 is further configured to obtain indication information. The indication information is used to indicate a type of the MIB.

The processing module 720 is configured to process the MIB based on the type of the MIB.

Optionally, the transceiver module 710 is specifically configured to:

obtain the indication information from a logical channel message;
obtain the indication information from the MIB; or
obtain the indication information from content carried in a broadcast channel.

Optionally, the transceiver module 710 is specifically configured to:
determine the indication information based on a resource location for receiving the MIB.

Optionally, the indication information includes at least one field. A value of the at least one field is used to indicate the type of the MIB.

Optionally, the type of the MIB includes a first type and a second type. A system message to which a first-type MIB belongs further includes a first SIB1, a first SIB2, a first SIB3, and a first SIB4. A system message to which a second-type MIB belongs further includes a second system information block SIB1.

Optionally, the second MIB includes some fields of the first MIB and the first SIB4. The second SIB1 includes some fields of the first SIB1, the first SIB2, and the first SIB4. The first SIB3 includes a field used to indicate configuration information of group hopping.

Optionally, the first SIB4 includes a configuration field of a plurality of sets of common resources, and the second SIB 1 further includes a configuration field of one set of common resources.

Optionally, the first SIB1 includes a field used to indicate enabling of uplink single hopping, downlink single hopping, uplink group hopping, or downlink group hopping; and the second SIB 1 further includes a field used to indicate whether to enable frequency hopping.

Optionally, frequency domain resources occupied by the second SIB1 and the second MIB are on one carrier. A time domain resource occupied by the second SIB 1 is 64 frames. A time domain resource occupied by the second MIB is 64 frames. The time domain resource occupied by the second MIB and the time domain resource occupied by the second SIB 1 are consecutive.

Optionally, the transceiver module 710 is further configured to: when the type of the MIB is the second type, obtain the second SIB1.

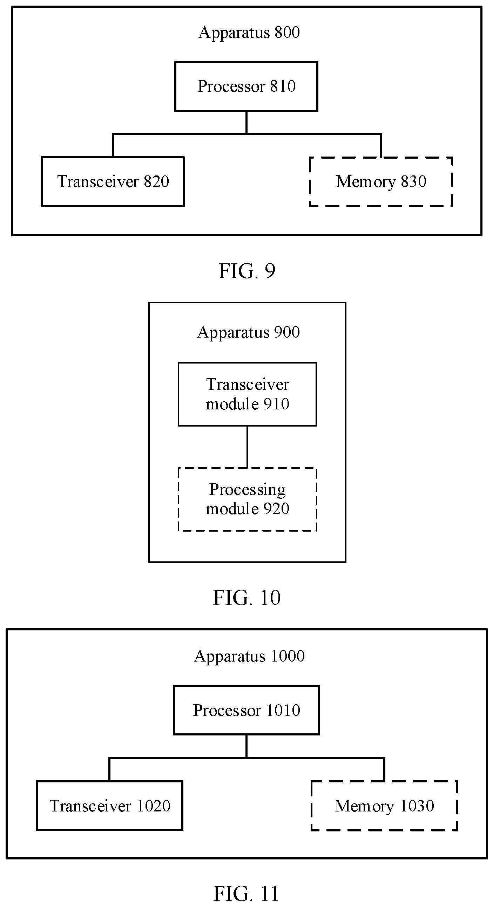

FIG. 9 is a schematic block diagram of a system message processing apparatus 800 according to an embodiment of this application. The apparatus 800 may be the terminal shown in FIG. 1 and the terminal shown in FIG. 3. The apparatus may use a hardware architecture shown in FIG. 9. The apparatus may include a processor 810 and a transceiver 820. Optionally, the apparatus may further include a memory 830. The processor 810, the transceiver 820, and the memory 830 communicate with one another by using an internal connection path. A related function implemented by the processing module 720 in FIG. 8 may be implemented by the processor 810, and a related function implemented by the transceiver module 710 may be implemented by controlling the transceiver 820 by the processor 810.

Optionally, the processor 810 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in the embodiments of this application. Alternatively, the processor may be one or more devices, circuits, and/or processing cores for processing data (for example, computer program instructions). For example, the processor may be a baseband processor or a central processing unit. The baseband processor may be configured to process a communication protocol and communication data. The central processing unit may be configured to: control the apparatus (for example, a base station, a terminal, or a chip), execute a software program, and process data of the software program.

Optionally, the processor 810 may include one or more processors, for example, include one or more central processing units (central processing unit, CPU). When the processor is one CPU, the CPU may be a singlecore CPU or a multi-core CPU.

The transceiver 820 is configured to send and receive data and/or a signal, and receive data and/or a signal. The transceiver may include a transmitter and a receiver. The transmitter is configured to send data and/or a signal, and the receiver is configured to receive data and/or a signal.

The memory 830 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 830 is configured to store related instructions and data.

The memory 830 is configured to store program code and data of the terminal, and may be an independent device or integrated into the processor 810.

Specifically, the processor 810 is configured to control the transceiver to transmit information with a network device. For details, refer to the descriptions in the method embodiments. Details are not described herein again.

It may be understood that, FIG. 9 shows merely a simplified design of the system message processing apparatus. During actual application, the apparatus may also include other necessary components, including but not limited to any quantity of transceivers, processors, controllers, memories, and the like, and all terminals that can implement this application shall fall within the protection scope of this application.

In a possible design, the apparatus 800 may be a chip, for example, may be a communications chip applicable to the terminal, and configured to implement a related function of the processor 810 in the terminal. The chip may be a field programmable gate array for implementing related functions, a dedicated integrated chip, a system chip, a central processing unit, a network processor, a digital signal processing circuit, a microcontroller, and a programmable controller or another integrated chip. The chip may optionally include one or more memories, configured to store program code. When the code is executed, the processor implements a corresponding function.

During specific implementation, in an embodiment, the apparatus 800 may further include an output device and an input device. When communicating with the processor 810, the output device may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). When communicating with the processor 601, the input device may receive input of a user in a plurality of manners. For example, the input device may be a mouse, a keyboard, a touchscreen device, or a sensing device.

FIG. 10 is a schematic block diagram of a system message processing apparatus 900 according to an embodiment of this application.

It should be understood that the apparatus 900 may correspond to the network device in the embodiment shown in FIG. 3, and may have any function of the network device in the method. The apparatus 900 includes a transceiver module 910.

The transceiver module 910 is configured to send a master information block MIB to a terminal.

The transceiver module 910 is further configured to send indication information to the terminal. The indication information is used to indicate a type of the MIB. The type of the MIB is used by the terminal to process the MIB.

Optionally, the apparatus 900 further includes a processing module 920. The processing module 920 is configured to determine the indication information.

Optionally, the transceiver module 910 is specifically configured to:

send a logical channel message to the terminal, where the logical channel message carries the indication information; or

send a broadcast channel to the terminal, where content carried in the broadcast channel carries the indication information.

Optionally, the indication information includes at least one field. A value of the at least one field is used to indicate the type of the MIB.

Optionally, the type of the MIB includes a first type and a second type. A system message to which a first-type MIB belongs further includes a first SIB1, a first SIB2, a first SIB3, and a first SIB4. A system message to which a second-type MIB belongs further includes a second system information block SIB1.

Optionally, the second MIB includes some fields of the first MIB and the first SIB4. The second SIB1 includes some fields of the first SIB1, the first SIB2, and the first SIB4. The first SIB3 includes a field used to indicate configuration information of group hopping.

Optionally, the first SIB4 includes a configuration field of a plurality of sets of common resources, and the second SIB 1 further includes a configuration field of one set of common resources.

Optionally, the first SIB 1 includes a field used to indicate enabling of uplink single hopping, downlink single hopping, uplink group hopping, or downlink group hopping; and the second SIB 1 further includes a field used to indicate whether to enable frequency hopping.

Optionally, frequency domain resources occupied by the second SIB1 and the second MIB are on one carrier. A time domain resource occupied by the second SIB 1 is 64 frames. A time domain resource occupied by the second MIB is 64 frames. The time domain resource occupied by the second MIB and the time domain resource occupied by the second SIB 1 are consecutive.

FIG. 11 shows a system message processing apparatus 1000 according to an embodiment of this application. The apparatus 1000 may be the network device shown in FIG. 1 and FIG. 3. The apparatus may use a hardware architecture shown in FIG. 11. The apparatus may include a processor 1010 and a transceiver 1020. Optionally, the apparatus may further include a memory 1030. The processor 1010, the transceiver 1020, and the memory 1030 communicate with one another by using an internal connection path. A related function implemented by the processing module 920 in FIG. 10 may be implemented by the processor 1010, and a related function implemented by the transceiver module 910 may be implemented by controlling the transceiver 1020 by the processor 1010.

Optionally, the processor 1010 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in the embodiments of this application. Alternatively, the processor may be one or more devices, circuits, and/or processing cores for processing data (for example, computer program instructions). For example, the processor may be a baseband processor or a central processing unit. The baseband processor may be configured to process a communication protocol and communication data. The central processing unit may be configured to: control the apparatus (for example, a base station, a terminal, or a chip), execute a software program, and process data of the software program.

Optionally, the processor 1010 may include one or more processors, for example, include one or more central processing units (central processing unit, CPU). When the processor is one CPU, the CPU may be a singlecore CPU or a multi-core CPU.

The transceiver 1020 is configured to send and receive data and/or a signal, and receive data and/or a signal. The transceiver may include a transmitter and a receiver. The transmitter is configured to send data and/or a signal, and the receiver is configured to receive data and/or a signal.

The memory 1030 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1030 is configured to store related instructions and data.

The memory 1030 is configured to store program code and data of the terminal, and may be an independent device or integrated into the processor 1010.

Specifically, the processor 1010 is configured to control the transceiver to transmit information with a network device. For details, refer to the descriptions in the method embodiments. Details are not described herein again.

During specific implementation, in an embodiment, the apparatus 1000 may further include an output device and an input device. When communicating with the processor 1010, the output device may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). When communicating with the processor 601, the input device may receive input of a user in a plurality of manners. For example, the input device may be a mouse, a keyboard, a touchscreen device, a sensing device, or the like.

It may be understood that, FIG. 11 shows merely a simplified design of the system message processing apparatus. During actual application, the apparatus may also include other necessary components, including but not limited to any quantity of transceivers, processors, controllers, memories, and the like, and all terminals that can implement this application shall fall within the protection scope of this application.

In a possible design, the apparatus 1000 may be a chip, for example, may be a communications chip applicable to the terminal, and configured to implement a related function of the processor 1010 in the terminal. The chip may be a field programmable gate array for implementing related functions, a dedicated integrated chip, a system chip, a central processing unit, a network processor, a digital signal processing circuit, a microcontroller, and a programmable controller or another integrated chip. The chip may optionally include one or more memories, configured to store program code. When the code is executed, the processor implements a corresponding function.

An embodiment of this application further provides an apparatus. The apparatus may be a terminal device, or may be a circuit. The apparatus may be configured to perform an action performed by the terminal in the foregoing method embodiments.

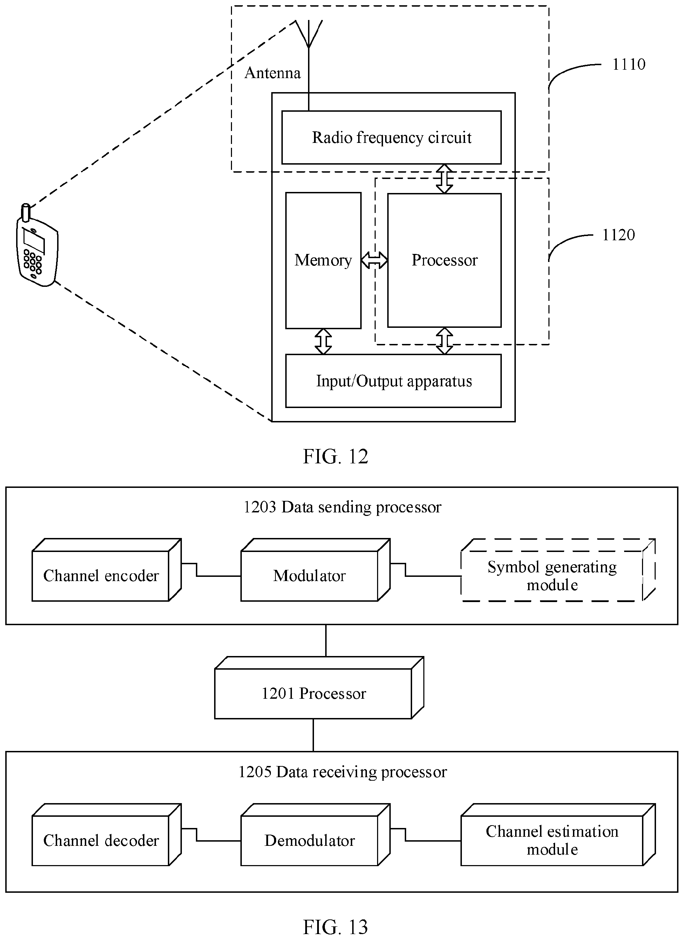

Optionally, when the apparatus in this embodiment is a terminal, FIG. 13 shows a simplified schematic structural diagram of a terminal. For ease of understanding and illustration, in FIG. 13, a mobile phone is used as an example of the terminal. As shown in FIG. 13, the terminal includes a processor, a memory, a radio frequency circuit, an antenna, and an input/output apparatus. The processor is mainly configured to: process a communication protocol and communication data, control the terminal, execute a software program, process data of a software program, and the like. The memory is mainly configured to store a software program and data. The radio frequency circuit is mainly configured to: perform conversion between a baseband signal and a radio frequency signal, and process a radio frequency signal. The antenna is mainly configured to receive and send a radio frequency signal in an electromagnetic wave form. The input/output apparatus such as a touchscreen, a display screen, or a keyboard is mainly configured to: receive data entered by a user, and output data to the user. It should be noted that some types of terminals may not have an input/output apparatus.

When data needs to be sent, after performing baseband processing on to-be-sent data, the processor outputs a baseband signal to the radio frequency circuit. After performing radio frequency processing on the baseband signal, the radio frequency circuit sends a radio frequency signal in an electromagnetic wave form through the antenna. When data is sent to the terminal, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 13. An actual terminal product may have one or more processors and one or more memories. The memory may also be referred to as a storage medium, a storage device, or the like. The memory may be disposed independent of the processor, or may be integrated with the processor. This is not limited in the embodiment of this application.

In this embodiment of this application, an antenna and a radio frequency circuit that have receiving and sending functions may be considered as a transceiver unit of the terminal, and a processor that has a processing function may be considered as a processing unit of the terminal. As shown in FIG. 13, the terminal includes a transceiver unit 1210 and a processing unit 1220. The transceiver unit may also be referred to as a transceiver, a transceiver, a transceiver apparatus, or the like. The processing unit may also be referred to as a processor, a processing board, a processing module, a processing apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes a receiving unit and a sending unit. Sometimes, the transceiver unit may also be referred to as a transceiver, a transceiver, a transceiver circuit, or the like. In some cases, the receiving unit may also be referred to as a receiver, a receiver, a receiving circuit, or the like. In some cases, the sending unit may also be referred to as a transmitter, a transmitter, a transmit circuit, or the like.

It should be understood that the transceiver unit 1210 is configured to perform a sending operation and a receiving operation on a terminal side in the foregoing method embodiments, and the processing unit 1220 is configured to perform another operation other than the sending operation and the receiving operation of the terminal in the foregoing method embodiments.

For example, in an implementation, the processing unit 1220 is configured to perform the operation in step 303 in FIG. 3, and/or the processing unit 1220 is further configured to perform another processing step on the terminal side in the embodiments of this application. The transceiver unit 1210 is configured to perform the sending operation and the receiving operation in step 310 and step 320 in FIG. 3, and/or the transceiver unit 1210 is further configured to perform another sending/receiving step on the terminal side in the embodiments of this application.

When the apparatus is a chip, the chip includes a transceiver unit and a processing unit. The transceiver unit may be an input/output circuit or a communications interface. The processing unit is a processor, a microprocessor, or an integrated circuit integrated on the chip.

Optionally, when the apparatus is a terminal, reference may be further made to the device shown in FIG. 13. For example, the device may complete functions similar to those of the processor 1110 in FIG. 12. In FIG. 13, the device includes a processor 1201, a data sending processor 1203, and a data receiving processor 1205. For the processing module 720 in the foregoing embodiment, the processing module 720 may be the processor 1201 in FIG. 13, and complete corresponding functions. The transceiver module 710 in the foregoing embodiment may be the data sending processor 1203 and the data receiving processor 1205 in FIG. 13. Although FIG. 13 shows a channel encoder and a channel decoder, it may be understood that these modules are only examples and do not constitute a limitative description of this embodiment.

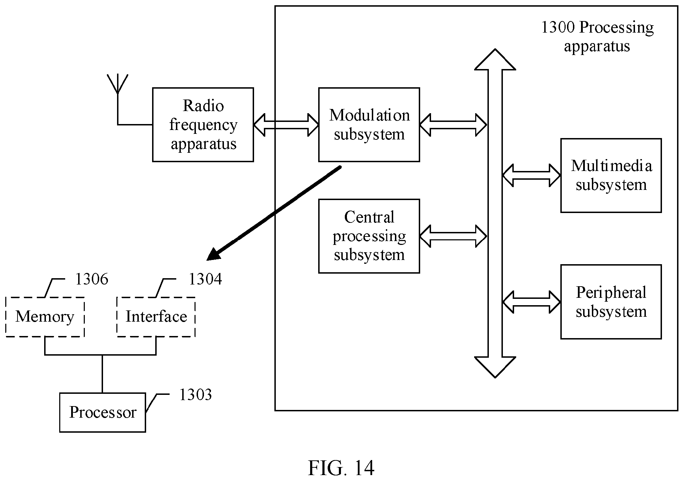

FIG. 14 shows another form of this embodiment. The processing apparatus 1300 includes modules such as a modulation subsystem, a central processing subsystem, and a peripheral subsystem. The communications device in this embodiment may be used as a modulation subsystem. Specifically, the modulation subsystem may include a processor 1303 and an interface 1304. The processor 1303 completes the functions of the processing module 720, and the interface 1304 completes the functions of the transceiver module 710. In another form, the modulation subsystem includes a memory 1306, a processor 1303, and a program that is stored in the memory and that can be run on the processor. When executing the program, the processor implements the method according to any one of Embodiments 1 to 5. It should be noted that the memory 1306 may be non-volatile or may be volatile. A location of the memory 1306 may be located in the modulation subsystem, or may be located in the processing apparatus 1300, provided that the memory 1306 can be connected to the processor 1303.

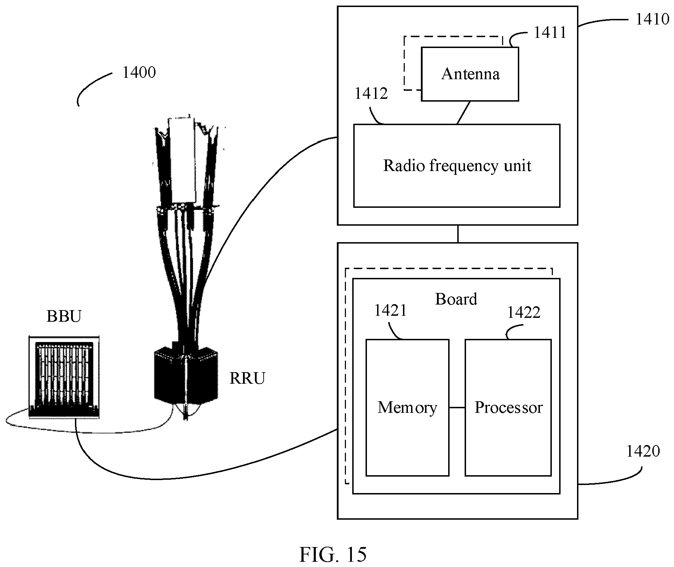

When the apparatus in this embodiment is a network device, the network device may be shown in FIG. 15. The apparatus 1400 includes one or more radio frequency units, for example, a remote radio unit (remote radio unit, RRU) 1410 and one or more baseband units (baseband unit, BBU) (also referred to as a digital unit (digital unit, DU)) 1420. The RRU 1410 may be referred to as a transceiver module, and corresponds to the transceiver module 910 in FIG. 10. Optionally, the transceiver module may also be referred to as a transceiver, a transceiver circuit, a transceiver, or the like. The transceiver unit may include at least one antenna 1412 and a radio frequency unit 1412. The RRU 1410 is mainly configured to: receive and send a radio frequency signal, and perform conversion between the radio frequency signal and a baseband signal, for example, send indication information to a terminal device. The BBU 1410 is mainly configured to perform baseband processing, control the base station, and the like. The RRU 1410 and the BBU 1420 may be physically disposed together, or may be physically disposed separately, to be specific, may be on a distributed base station.

The BBU 1420 is a control center of a base station, may be referred to as a processing module, and may correspond to the processing module 920 in FIG. 10. The BBU 1420 is mainly configured to complete a baseband processing function, for example, channel encoding, multiplexing, modulation, or spectrum spreading. For example, the BBU (the processing module) may be configured to control the base station to perform an operation procedure related to the network device in the foregoing method embodiments, for example, generate the foregoing indication information.

In an example, the BBU 1420 may include one or more boards, and a plurality of boards may jointly support a radio access network (such as an LTE network) of a single access standard, or may separately support radio access networks (such as an LTE network, a 5G network, or another network) of different access standards. The BBU 1420 further includes a memory 1421 and a processor 1422. The memory 1421 is configured to store necessary instructions and data. The processor 1422 is configured to control the base station to perform a necessary action, for example, configured to control the base station to perform an operation procedure related to the network device in the foregoing method embodiment. The memory 1421 and the processor 1422 may serve one or more boards. In other words, a memory and a processor may be separately disposed on each board, or a plurality of boards may share the same memory and processor. In addition, a necessary circuit may be disposed on each board.

In another form of this embodiment, a computer-readable storage medium is provided. Instructions are stored on the computer-readable storage medium. When the instructions are executed, the method in the foregoing method embodiment is executed.

In another form of this embodiment, a computer program product including instructions is provided. When the instructions are executed, the method in the foregoing method embodiment is performed.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer instructions are loaded and executed on the computer, the procedures or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

It should be understood that the processor may be an integrated circuit chip and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logical device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus dynamic random access memory (direct rambus RAM, DR RAM).

In this application, "at least one" indicates one or more, and "a plurality of' indicates two or more. The term "and/or" describes an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one of the following" or a similar expression thereof indicates any combination of these items, including any combination of a single item or a plurality of items. For example, at least one of a, b, and c may represent a, b, c, a and b, a and c, b and c, or a and b and c, where a, b, and c may be singular or plural.

It should be understood that "one embodiment" or "an embodiment" mentioned in the whole specification does not mean that particular features, structures, or characteristics related to the embodiment are included in at least one embodiment of the present invention. Therefore, "in one embodiment" or "in an embodiment" appearing throughout the specification does not necessarily refer to a same embodiment. In addition, these particular features, structures, or characteristics may be combined in one or more embodiments in any appropriate manner. It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

It should be further understood that first, second, and various reference numerals in this specification are for distinguishing only for ease of description, and are not intended to limit the scope of the embodiments of this application.

The term "and/or" in this specification describes only an association relationship for describing associated objects and represents that three relationships may exist. For example, A and/or B may represent the following three cases: Only A exists, both A and B exist, and only B exists, where A or B independently exists, and a quantity of As or Bs is not limited. An example in which A independently exists may be understood as one or more As.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A system message processing method, comprising:

   receiving, by a terminal, a master information block MIB;
   obtaining, by the terminal, indication information, wherein the indication information is used to indicate a type of the MIB; and
processing, by the terminal, the MIB based on the type of the MIB.

2. The method according to claim 1, wherein the obtaining, by the terminal, indication information comprises:

obtaining, by the terminal, the indication information from a logical channel message;
obtaining, by the terminal, the indication information from the MIB; or
obtaining, by the terminal, the indication information from content carried in a broadcast channel.

3. The method according to claim 1, wherein the obtaining, by the terminal, indication information comprises:

determining, by the terminal, the indication information based on a resource location for receiving the MIB; or
determining, by the terminal, the indication information based on a sequence of a received synchronization signal, wherein the synchronization signal comprises a first synchronization signal and a second synchronization signal.

4. The method according to claim 3, wherein the determining, by the terminal, the indication information based on a sequence of a received synchronization signal comprises:

when the sequence of the synchronization signal belongs to a first sequence set, determining, by the terminal, that the indication information is used to indicate a type of a first MIB; or
when the sequence of the synchronization signal belongs to a second sequence set, determining, by the terminal, that the indication information is used to indicate a type of a third MIB.

5. The method according to any one of claims 1 to 4, wherein the indication information comprises at least one field, and a value of the at least one field is used to indicate the type of the MIB.

6. The method according to any one of claims 1 to 3, wherein the type of the MIB comprises a first type and a second type, a system message to which a first-type MIB belongs further comprises a first SIB 1, a first SIB2, a first SIB3, and a first SIB4, and a system message to which a second-type MIB belongs further comprises a second system information block SIB1.

7. The method according to claim 6, wherein the second MIB comprises some fields of the first MIB and the first SIB4, the second SIB1 comprises some fields of the first SIB1, the first SIB2, and the first SIB4, and the first SIB3 comprises a field used to indicate configuration information of group hopping.

8. The method according to claim 6, wherein the first SIB4 comprises a configuration field of a plurality of sets of common resources, and the second SIB 1 comprises a configuration field of one set of common resources.

9. The method according to any one of claims 6 to 8, wherein frequency domain resources occupied by the second SIB1 and the second MIB are on one carrier, a time domain resource occupied by the second SIB1 is 64 frames, a time domain resource occupied by the second MIB is 64 frames, and the time domain resource occupied by the second MIB and the time domain resource occupied by the second SIB 1 are consecutive.

10. The method according to any one of claims 6 to 9, wherein the method further comprises:
when the type of the MIB is the second type, obtaining, by the terminal, the second SIB1.

11. A system message processing method, comprising:

sending, by a network device, a master information block MIB to a terminal; and
sending, by the network device, indication information to the terminal, wherein the indication information is used to indicate a type of the MIB, and the type of the MIB is used by the terminal to process the MIB.

12. The method according to claim 11, wherein the sending, by the network device, indication information to the terminal comprises:

sending, by the network device, a logical channel message to the terminal, wherein the logical channel message carries the indication information; or

sending, by the network device, a broadcast channel to the terminal, wherein content carried in the broadcast channel carries the indication information.

13. The method according to claim 11 or 12, wherein the indication information comprises at least one field, and a value of the at least one field is used to indicate the type of the MIB.

14. The method according to any one of claims 11 to 13, wherein the type of the MIB comprises a first type and a second type, a system message to which a first-type MIB belongs further comprises a first SIB 1, a first SIB2, a first SIB3, and a first SIB4, and a system message to which a second-type MIB belongs further comprises a second system information block SIB1.

15. The method according to claim 14, wherein the second MIB comprises some fields of the first MIB and the first SIB4, the second SIB1 comprises some fields of the first SIB1, the first SIB2, and the first SIB4, and the first SIB3 comprises a field used to indicate configuration information of group hopping.

16. The method according to claim 14 or 15, wherein the first SIB4 comprises a configuration field of a plurality of sets of common resources, and the second SIB 1 comprises a configuration field of one set of common resources.

17. The method according to any one of claims 14 to 16, wherein frequency domain resources occupied by the second SIB 1 and the second MIB are on one carrier, a time domain resource occupied by the second SIB 1 is 64 frames, a time domain resource occupied by the second MIB is 64 frames, and the time domain resource occupied by the second MIB and the time domain resource occupied by the second SIB 1 are consecutive.

18. A system message processing apparatus, comprising:

a transceiver module, configured to receive a master information block MIB, wherein
the transceiver module is further configured to obtain indication information, wherein the indication information is used to indicate a type of the MIB; and
a processing module, configured to process the MIB based on the type of the MIB.

19. The apparatus according to claim 18, wherein the transceiver module is specifically configured to:

obtain the indication information from a logical channel message;
obtain the indication information from the MIB; or
obtain the indication information from content carried in a broadcast channel.

20. The apparatus according to claim 18, wherein the transceiver module is specifically configured to:

determine the indication information based on a resource location for receiving the MIB; or
determine, by a terminal, the indication information based on a sequence of a received synchronization signal, wherein the synchronization signal comprises a first synchronization signal and a second synchronization signal.

21. The apparatus according to claim 20, wherein the processing module is specifically configured to:

when the sequence of the synchronization signal belongs to a first sequence set, determine that the indication information is used to indicate a first MIB; or
when the sequence of the synchronization signal belongs to a second sequence set, determine that the indication information is used to indicate a third MIB.

22. The apparatus according to any one of claims 18 to 21, wherein the indication information comprises at least one field, and a value of the at least one field is used to indicate the type of the MIB.

23. The apparatus according to any one of claims 18 to 20, wherein the type of the MIB comprises a first type and a second type, a system message to which a first-type MIB belongs further comprises a first SIB1, a first SIB2, a first SIB3, and a first SIB4, and a system message to which a second-type MIB belongs further comprises a second system information block SIB 1.

24. The apparatus according to claim 23, wherein the second MIB comprises some fields of the first MIB and the first SIB4, the second SIB1 comprises some fields of the first SIB1, the first SIB2, and the first SIB4, and the first SIB3 comprises a field used to indicate configuration information of group hopping.

25. The apparatus according to claim 23, wherein the first SIB4 comprises a configuration field of a plurality of sets of common resources, and the second SIB 1 comprises a configuration field of one set of common resources.

26. The apparatus according to any one of claims 23 to 25, wherein frequency domain resources occupied by the second SIB 1 and the second MIB are on one carrier, a time domain resource occupied by the second SIB 1 is 64 frames, a time domain resource occupied by the second MIB is 64 frames, and the time domain resource occupied by the second MIB and the time domain resource occupied by the second SIB 1 are consecutive.

27. The apparatus according to any one of claims 23 to 26, wherein the transceiver module is further configured to: when the type of the MIB is the second type, obtain the second SIB 1.

28. A system message processing apparatus, comprising:

   a transceiver module, configured to send a master information block MIB to a terminal, wherein
   the transceiver module is further configured to send indication information to the terminal, wherein the indication information is used to indicate a type of the MIB, and the type of the MIB is used by the terminal to process the MIB.

29. The apparatus according to claim 28, wherein the transceiver module is specifically configured to:

   send a logical channel message to the terminal, wherein the logical channel message carries the indication information; or
   send a broadcast channel to the terminal, wherein content carried in the broadcast channel carries the indication information.

30. The apparatus according to claim 28 or 29, wherein the indication information comprises at least one field, and a value of the at least one field is used to indicate the type of the MIB.

FIG. 1

Terminal

Network device

201. MIB carrying scheduling information of a SIB1

202. Obtain the SIB1 based on the scheduling information of the SIB1, where the SIB1 carries scheduling information of a SIB2, a SIB3, and a SIB4

203. Obtain the SIB2, the SIB3, and the SIB4 based on the scheduling information of the SIB2, the SIB3, and the SIB4

204. MSG1

205. MSG2

206. RRC connection setup request

207. RRC connection setup message

208. RRC connection setup complete message

FIG. 2

| Terminal | | Network device |
|----------|--|----------------|

301. Receive a MIB

302. Obtain indication information, where the indication information is used to indicate a type of the MIB

303. Process the MIB based on the type of the MIB

FIG. 3

| First-type system message | Remove scheduling information of a SIB1, and reduce ValueTag | Second-type system message |
|---|---|---|
| MIB | | MIB |
| | Reduce an access control parameter, remove synchronization channel backup, and reduce enabling of frequency hopping | |
| SIB1 | | SIB1 |
| SIB2 | Start frequency. Reduce a quantity of valid carriers and an indication manner | |
| SIB3 | Do not support group hopping. Content of a SIB3 is not needed. | |
| SIB4 | Support configuration of only one set of PLMNs / PCCH configuration | |

FIG. 4

MIB                                    SIB1

Carrier x

0                    63                    127

FIG. 5

| MIB | → | Code block | → | MIB | → | Code block |
|-----|---|------------|---|-----|---|------------|

| IPSS | ISSS | ... | IPSS | ISSS | PBCH | IPSS | ISSS | ... | IPSS | ISSS | PDSCH |
|------|------|-----|------|------|------|------|------|-----|------|------|-------|

←——— Eight frames ———✗——— Eight frames ———✗——— Eight frames ———✗——— Eight frames ———→

FIG. 6

```
┌──────────────┐                                    ┌──────────────────┐
│   Terminal   │                                    │  Network device  │
└──────────────┘                                    └──────────────────┘
        │                                                     │
        │◄──────── 601. Receive a system message ────────────│
        │                                                     │
┌──────────────────────────────────┐                         │
│ 602. Obtain indication information,│                        │
│ where the indication information is used│                   │
│ to indicate a type of the system message│                  │
└──────────────────────────────────┘                         │
        │                                                     │
┌──────────────────────────────────┐                         │
│ 603. Process the system message based│                      │
│ on the type of the system message │                         │
└──────────────────────────────────┘                         │
        │                                                     │
```

FIG. 7

```
┌────────────────────────────┐
│      Apparatus 700          │
│   ┌────────────────────┐    │
│   │   Transceiver      │    │
│   │   module 710       │    │
│   └────────────────────┘    │
│            │                │
│   ┌────────────────────┐    │
│   │   Processing       │    │
│   │   module 720       │    │
│   └────────────────────┘    │
└────────────────────────────┘
```

FIG. 8

Apparatus 800

Processor 810

Transceiver 820

Memory 830

FIG. 9

Apparatus 900

Transceiver module 910

Processing module 920

FIG. 10

Apparatus 1000

Processor 1010

Transceiver 1020

Memory 1030

FIG. 11

FIG. 12

FIG. 13

FIG. 14

FIG. 15

## INTERNATIONAL SEARCH REPORT

| International application No. |
|---|
| **PCT/CN2019/072241** |

**A. CLASSIFICATION OF SUBJECT MATTER**

H04L 12/24(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNKI, CNPAT, WPI, EPODOC: 主信息块, 系统信息块, 主系统信息, 类型, 类别, 指示, 处理, 解析, 解码, MIB, SIB, type, process, parse, decode

**C. DOCUMENTS CONSIDERED TO BE RELEVANT**

| Category* | Citation of document, with indication, where appropriate, of the relevant passages | Relevant to claim No. |
|---|---|---|
| X | CN 106612555 A (POTEVIO INFORMATION TECHNOLOGY CO., LTD.) 03 May 2017 (2017-05-03) <br> description, paragraphs [0035]-[0050] | 1-30 |
| X | CN 106685609 A (SHARP CORPORATION) 17 May 2017 (2017-05-17) <br> description, paragraphs [0035]-[0061] and [0112]-[0122] | 1-30 |
| A | WO 2016172293 A1 (QUALCOMM INCORPORATED) 27 October 2016 (2016-10-27) <br> entire document | 1-30 |
| A | CN 104349420 A (SHANGHAI MOBILEPEAK SYSTEMS, INC.) 11 February 2015 (2015-02-11) <br> entire document | 1-30 |

☐ Further documents are listed in the continuation of Box C. ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **16 September 2019** | **30 September 2019** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/072241**

| Patent document cited in search report | | | Publication date (day/month/year) | Patent family member(s) | | | Publication date (day/month/year) |
|---|---|---|---|---|---|---|---|
| CN | 106612555 | A | 03 May 2017 | None | | | |
| CN | 106685609 | A | 17 May 2017 | US | 2018324719 | A1 | 08 November 2018 |
| | | | | EP | 3373495 | A1 | 12 September 2018 |
| | | | | WO | 2017076317 | A1 | 11 May 2017 |
| WO | 2016172293 | A1 | 27 October 2016 | EP | 3493600 | A1 | 05 June 2019 |
| | | | | JP | 2018517338 | A | 28 June 2018 |
| | | | | US | 2016315752 | A1 | 27 October 2016 |
| | | | | EP | 3286956 | A1 | 28 February 2018 |
| | | | | BR | 112017022650 | A2 | 17 July 2018 |
| | | | | KR | 20170139531 | A | 19 December 2017 |
| | | | | CN | 107534974 | A | 02 January 2018 |
| | | | | ID | 201804928 | A | 11 May 2018 |
| | | | | IN | 201727031045 | A | 10 November 2017 |
| CN | 104349420 | A | 11 February 2015 | None | | | |

Form PCT/ISA/210 (patent family annex) (January 2015)